(19) Europäisches Patentamt
European Patent Office
Office européen des brevets

(11) **EP 4 394 461 B1**

(12) **EUROPÄISCHE PATENTSCHRIFT**

(45) Veröffentlichungstag und Bekanntmachung des Hinweises auf die Patenterteilung:
**16.07.2025 Patentblatt 2025/29**

(21) Anmeldenummer: **23000001.0**

(22) Anmeldetag: **01.01.2023**

(51) Internationale Patentklassifikation (IPC):
**G01J 4/04** *(2006.01)*    **G02B 5/18** *(2006.01)*
**G02B 5/30** *(2006.01)*

(52) Gemeinsame Patentklassifikation (CPC):
**G01J 4/04; G02B 5/1819; G02B 5/1857; G02B 5/3025**

(54) **INTEGRIERTE SCHALTUNG ZUR MESSUNG DER POLARISATION VON LICHT**

INTEGRATED CIRCUIT FOR MEASURING THE POLARIZATION OF LIGHT

CIRCUIT INTÉGRÉ POUR MESURER LA POLARISATION DE LA LUMIÈRE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**03.07.2024 Patentblatt 2024/27**

(73) Patentinhaber: **POLDI microelectronics GmbH**
**45657 Recklinghausen (DE)**

(72) Erfinder: **Grau, Günter**
**46282 Dorsten (DE)**

(74) Vertreter: **Gottschald**
**Patentanwälte Partnerschaft mbB**
**Klaus-Bungert-Straße 1**
**40468 Düsseldorf (DE)**

(56) Entgegenhaltungen:
**EP-A1- 2 522 960       US-A1- 2016 282 149**
**US-A1- 2022 221 311    US-B1- 6 275 291**

**Beschreibung**

Die vorliegende Erfindung betrifft eine integrierte Schaltung zur Messung der Polarisation von Licht gemäß Anspruch 1 sowie eine integrierte Schaltung zur Messung der Polarisation von Licht gemäß Anspruch 2 sowie eine integrierte Schaltung zur Messung der Polarisation von Licht gemäß Anspruch 3.

Der bekannte Stand der Technik (DE 102005031966 A1, EP 1902334 A1), von dem die Erfindung ausgeht, betrifft eine integrierte Schaltung zur Messung der Polarisation von Licht gemäß Anspruch 1.

Die EP 2 522 960 A1 offenbart eine Vorrichtung und ein Verfahren zur Messung des Drehwinkels zweier relativ zueinander rotierender Objekte. Die US 2022/221311 A1 betrifft einen optischen Rotationspositionsgeber mit einem rotierenden optischen Verzögerer. In der US 2016/282149 A1 ist ein weiterer optischer Positionsgeber mit mehreren Fotoempfängern beschrieben. Die US 6,275,291 B1 betrifft ein Mikropolarimeter und ein Ellipsometer zum Ermitteln vollständiger optischer Informationen beleuchteter Objekte mit einer kompakten Bauweise.

Die vorliegende Erfindung betrifft Anordnungen von Elementen, insbesondere Sensoren, mit reduziertem Einfluss unerwünschter Größen wie z.B. räumlich ungleich verteilter Signalstärke oder Herstellungsgradienten, sowie Verfahren zur Erzeugung derartiger Anordnungen. Verwendung für diese Anordnungen findet sich z.B. im Bereich der Polarisations-, Farb- und Magnetfeldmessung.

Polarisationswinkelsensoren haben einen großen Vorteil gegenüber optischen Encodern, da sie durch Verwendung eines unstrukturierten Polfilters als Drehgeber gegen mechanische Toleranzen und Vibration unempfindlich sind. Das grundsätzliche Messprinzip, beruhend auf dem Malus-Gesetz, kann bereits mit einem polarisationsempfindlichen Einzelsensor demonstriert werden. Praktisch anwendbar wird es erst unter Verwendung von wenigstens zwei Sensoren, die jeweils auf eine unterschiedliche Polarisationsrichtung ansprechen. Eine besonders günstige Anordnung ergibt sich aus vier um je 45° verdrehten Filtern (DE 102005031966 A1, EP 1902334 A1). Der Vorteil ergibt sich daraus, dass die vier Signale ein differentielles Quadratursignal bilden. Bei Drehung der Polarisationsebene des einfallenden Lichts entstehen daher Sinus- und Kosinus-Signale, die unabhängig von der Helligkeit des einfallenden Lichts ausgewertet werden können.

Diese einfache Anordnung hat jedoch noch den Nachteil, dass sie bei ungleichmäßiger Beleuchtung ein fehlerhaftes Signal liefert, weil die verschieden orientierten Sensorfelder dann unterschiedlich stark bestrahlt werden. Dieser Effekt ist nicht ohne weiteres von einer entsprechenden Polarisationsinformation zu unterscheiden. Mit umliegenden Helligkeitssensoren könnte man z.B. einen linearen Helligkeitsgradienten sowie dessen Stärke und Richtung ermitteln und dies bei der Signalauswertung berücksichtigen. Bei einer weitgehend ungleichförmigen Ausleuchtung mit nichtlinearen Gradienten, etwa dem Beleuchtungsprofil einer LED, gelingt dies jedoch nicht.

Um den Fehler durch Helligkeitsgradienten zu reduzieren, kann die gewünschte gesamte Sensorfläche in kleinere Teilsensoren zerlegt und die unterschiedlichen Teilsensoren geeignet verteilt werden. Dies ist ein in der Elektronik durchaus üblicher Vorgang, der z.B. auch für das Matching von Differenzverstärkern (cross-coupled pairs) oder bei der Anordnung von Stromquellen in einem DAC verwendet wird. Dort geht es um produktionsbedingte Gradienten in Bauteilparametern oder auch systembedingte Gradienten der Temperatur, Spannungen auf Leiterbahnen etc.

Für die Verteilung der Teilsensoren gelten ähnliche, jedoch nicht dieselben Regeln wie für die Plazierung etwa von matchenden Transistoren. Für die Plazierung von z.B. Transistoren eines Differenzverstärkers oder der Stromquellen eines DACs gilt es, den Einfluss der Fertigung, etwa Gradienten über dem Wafer, zu minimieren. Diese bleiben normalerweise über die Lebensdauer bei gleichbleibenden Arbeitsbedingungen konstant. Auch wird normalerweise davon ausgegangen, dass die Schaltung klein ist und sich ein schwacher Gradient über einen großen Bereich ausdehnt, so dass meist nur lineare Gradienten kompensiert werden. Insbesondere wird oft nicht davon ausgegangen, dass auf der zu kompensierenden Schaltungsfläche ein lokales Maximum mit variabler Position erreicht wird. Dies ist jedoch bei Sensoren häufig der Fall.

Im Falle des Polarisationssensors geht es in erster Linie um den Einfluss von unbekannten Helligkeitsverteilungen über der Sensorfläche, also einer Größe, die sich auch im Verlauf einer einzelnen Messung ändern kann. Insbesondere bei miniaturisierten Aufbauten sind auf kleinem Raum viel größere Änderungen zu erwarten, etwa dann, wenn das Licht einer Leuchtdiode nur wenig mehr als die Sensorfläche ausleuchtet, die Beleuchtung nicht korrekt ausgerichtet ist (Offset), oder Konstruktionsmerkmale der Lichtquelle (z.B. zentraler Bonddraht einer LED) oder Optik zu lokal begrenzten Helligkeitsänderungen führen. Auch Staubpartikel irgendwo im System können vergleichbare Fehler verursachen.

Für die Optimierung der Struktur eines Sensors oder anderer Elemente in einem Array sind daher teilweise andere Kriterien zugrundezulegen. Für die Beleuchtung mit einer LED ist etwa deren Strahlprofil von Interesse und die Frage, wie stark sich die Beleuchtung des Sensors durch diese LED über dem Ort ändert und wie die Sensorsignale möglichst gleichmäßig aufgeteilt werden können.

Es ist dabei eine Herausforderung, den bekannten Stand der Technik zu verbessern.

Der Erfindung liegt das Problem zugrunde, das bekannte Verfahren zur iterativen Erzeugung einer Matrix derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Wesentlich ist die grundsätzliche Überlegung, verschiedene Grundelemente einer Anordnung, etwa ein Sensor-Array, so anzuordnen, dass die Empfindlichkeit gegen lokale Störungen, etwa Intensitätsschwankungen, minimiert wird. Zu diesem Zweck wird auch ein Verfahren beschrieben, mit dessen Hilfe sich derartige Anordnungen effizient erzeugen lassen.

Beispielhaft kann das Sensorarray eines polarisationsbasierten Drehwinkelsensors aus den N Grundelement-Typen z.B. N=1,2,3,4 bestehen, deren individuelle Ausrichtung der Polarisationsachse gegenüber einer gewählten Referenz etwa 0°, 45°, 90° und 135° beträgt, um ein differentielles Quadratursignal zu erzeugen. Eine ähnliche Konfiguration ergibt sich für diverse magnetische Sensoren nach magnetoresistiven Effekten, sofern diese ähnlich der Polarisationsmessung 180°-periodisch sind. Bei Grundelementen, die ein 360°-periodisches Signal ergeben, etwa Hall-Sensoren, würde man die individuelle Ausrichtung eher zu 0°, 90°, 180° und 270° wählen. Mit Blick auf die hier gezeigten Matrizen sollten die Elemente 1,3 bzw. 2,4 vorzugsweise orthogonal zueinander orientiert sein. Im Allgemeinen ist die Zuordnung der Nummer zur gewählten Ausrichtung bzw. Sensortype jedoch willkürlich. Auch verschiedene Farbfilter lassen sich erfindungsgemäß so anordnen, dass die Farbmessung möglichst unempfindlich gegenüber der Struktur des einfallenden Lichts ist. Auch im Fall eines Bayer-Pattern (BGGR) kann das Konzept angewendet werden, hier liegt das grüne Filter doppelt vor und bekommt folglich zwei Indices zugewiesen.

Nach einer Lehre gemäß Anspruch 1, der eigenständige Bedeutung zukommt, wird eine integrierte Schaltung zur Messung der Polarisation von Licht beansprucht,

- mit polarisationsempfindlichen Sensoren mit unterschiedlichen Ausrichtungen der Polarisationsebenen als Grundelemente in vier unterschiedlichen Ausrichtungen,
- mit sensorischen Elementen, die je mit einem Polarisationsfilter zu einem der polarisationsempfindlichen Sensoren als bauliche Einheit zusammenwirkend angeordnet sind,
- wobei das polarisationsempfindliche Filter des als bauliche Einheit angeordneten polarisationsempfindlichen Sensors eine gezielte Ausdehnung und Orientierung aufweist,
- wobei das Polarisationsfilter mit lithographischen Methoden erzeugte Gitterstrukturen in mindestens einer Fertigungsebene aufweist,
- wobei die polarisationsempfindlichen Sensoren unterschiedlicher Ausrichtung aus einer Vielzahl von einzelnen Sensorelementen bestehen, die in einer Matrix angeordnet sind,

- wobei in der integrierten Schaltung Einrichtungen vorhanden sind, die konfiguriert sind, aus den Signalen der polarisationsempfindlichen Sensoren eine Aussage über die Polarisation des einfallenden Lichts zu treffen,
- wobei die Grundelemente mit unterschiedlichen Ausrichtungen in einer 8x8-Matrix angeordnet sind.

Nach einer Lehre gemäß Anspruch 2, der eigenständige Bedeutung zukommt, wird eine integrierte Schaltung zur Messung der Polarisation von Licht beansprucht,

- mit polarisationsempfindlichen Sensoren mit unterschiedlichen Ausrichtungen der Polarisationsebenen als Grundelemente in vier unterschiedlichen Ausrichtungen,
- mit sensorischen Elementen, die je mit einem Polarisationsfilter zu einem der polarisationsempfindlichen Sensoren als bauliche Einheit zusammenwirkend angeordnet sind,
- wobei das polarisationsempfindliche Filter des als bauliche Einheit angeordneten polarisationsempfindlichen Sensors eine gezielte Ausdehnung und Orientierung aufweist,
- wobei das Polarisationsfilter mit lithographischen Methoden erzeugte Gitterstrukturen in mindestens einer Fertigungsebene aufweist,
- wobei die polarisationsempfindlichen Sensoren unterschiedlicher Ausrichtung aus einer Vielzahl von einzelnen Sensorelementen bestehen, die in einer Matrix angeordnet sind,
- wobei in der integrierten Schaltung Einrichtungen vorhanden sind, die konfiguriert sind, aus den Signalen der polarisationsempfindlichen Sensoren eine Aussage über die Polarisation des einfallenden Lichts zu treffen,
- wobei die Grundelemente mit unterschiedlichen Ausrichtungen in einer 16x16-Matrix angeordnet sind.

Auf alle Ausführungen zu der vorschlagsgemäßen integrierten Schaltung gemäß der ersten Lehre darf verwiesen werden.

Nach einer Lehre gemäß Anspruch 3, der eigenständige Bedeutung zukommt, wird eine integrierte Schaltung zur Messung der Polarisation von Licht beansprucht,

- mit polarisationsempfindlichen Sensoren mit unterschiedlichen Ausrichtungen der Polarisationsebenen als Grundelemente in vier unterschiedlichen Ausrichtungen,
- mit sensorischen Elementen, die je mit einem Polarisationsfilter zu einem der polarisationsempfindlichen Sensoren als bauliche Einheit zusammenwirkend angeordnet sind,
- wobei das polarisationsempfindliche Filter des als bauliche Einheit angeordneten polarisationsempfindlichen Sensors eine gezielte Ausdehnung und Orientierung aufweist,

- wobei das Polarisationsfilter mit lithographischen Methoden erzeugte Gitterstrukturen in mindestens einer Fertigungsebene aufweist,
- wobei die polarisationsempfindlichen Sensoren unterschiedlicher Ausrichtung aus einer Vielzahl von einzelnen Sensorelementen bestehen, die in einer Matrix angeordnet sind,
- wobei in der integrierten Schaltung Einrichtungen vorhanden sind, die konfiguriert sind, aus den Signalen der polarisationsempfindlichen Sensoren eine Aussage über die Polarisation des einfallenden Lichts zu treffen,
- wobei die Grundelemente mit unterschiedlichen Ausrichtungen in einer 32x32-Matrix angeordnet sind.

Auf alle Ausführungen zu der vorschlagsgemäßen integrierten Schaltung gemäß der ersten Lehre und der vorschlagsgemäßen integrierten Schaltung gemäß der zweiten Lehre darf verwiesen werden.

Nach der bevorzugten Ausgestaltung gemäß Anspruch 4 ist vorgesehen, dass das Polarisationsfilter mit lithographischen Methoden erzeugte Gitterstrukturen in mindestens einer Fertigungsebene und/oder Verdrahtungsebene aufweist, wobei zwischen den Bereichen mit Gitterstrukturen lichtundurchlässige Wände vorhanden sind, die bei schrägem Lichteinfall eine Beeinflussung benachbarter Sensoren unterbinden, wobei die lichtundurchlässigen Wände durch Vias bzw. Kontakte hergestellt sind.

Im Folgenden wird die Erfindung anhand einer lediglich Ausführungsbeispiele darstellenden Zeichnung näher erläutert.

Das in den Figuren dargestellte und insoweit bevorzugte Ausführungsbeispiel betrifft eine integrierte Schaltung zur Messung der Polarisation von Licht

- mit polarisationsempfindlichen Sensoren mit unterschiedlichen Ausrichtungen der Polarisationsebenen als Grundelemente in vier unterschiedlichen Ausrichtungen (1,2,3,4),
- mit sensorischen Elementen, die je mit einem Polarisationsfilter zu einem der polarisationsempfindlichen Sensoren als bauliche Einheit zusammenwirkend angeordnet sind,
- wobei das polarisationsempfindliche Filter des als bauliche Einheit angeordneten polarisationsempfindlichen Sensors eine gezielte Ausdehnung und Orientierung aufweist,
- wobei das Polarisationsfilter mit lithographischen Methoden erzeugte Gitterstrukturen in mindestens einer Fertigungsebene aufweist,
- wobei die polarisationsempfindlichen Sensoren unterschiedlicher Ausrichtung aus einer Vielzahl von einzelnen Sensorelementen bestehen, die in einer Matrix angeordnet sind,

- wobei in der integrierten Schaltung Einrichtungen vorhanden sind, die konfiguriert sind, aus den Signalen der polarisationsempfindlichen Sensoren eine Aussage über die Polarisation des einfallenden Lichts zu treffen,
- wobei die Grundelemente mit unterschiedlichen Ausrichtungen (1,2,3,4) in einer 8x8-Matrix angeordnet sind,
- wobei die Grundelemente in der ersten Zeile der 8x8-Matrix die Anordnung [1,2,3,4,2,1,4,3], der zweiten Zeile der 8x8-Matrix die Anordnung [4,3,2,1,3,4,1,2], der dritten Zeile der 8x8-Matrix die Anordnung [3,4,1,2,4,3,2,1], der vierten Zeile der 8x8-Matrix die Anordnung [2,1,4,3,1,2,3,4], der fünften Zeile der 8x8-Matrix die Anordnung [4,3,2,1,3,4,1,2], der sechsten Zeile der 8x8-Matrix die Anordnung [1,2,3,4,2,1,4,3], der siebten Zeile der 8x8-Matrix die Anordnung [2,1,4,3,1,2,3,4] und der achten Zeile der 8x8-Matrix die Anordnung [3,4,1,2,4,3,2,1] aufweisen.

Das in den Figuren dargestellte und insoweit bevorzugte Ausführungsbeispiel betrifft ferner eine integrierte Schaltung zur Messung der Polarisation von Licht

- mit polarisationsempfindlichen Sensoren mit unterschiedlichen Ausrichtungen der Polarisationsebenen als Grundelemente in vier unterschiedlichen Ausrichtungen (1,2,3,4),
- mit sensorischen Elementen, die je mit einem Polarisationsfilter zu einem der polarisationsempfindlichen Sensoren als bauliche Einheit zusammenwirkend angeordnet sind,
- wobei das polarisationsempfindliche Filter des als bauliche Einheit angeordneten polarisationsempfindlichen Sensors eine gezielte Ausdehnung und Orientierung aufweist,
- wobei das Polarisationsfilter mit lithographischen Methoden erzeugte Gitterstrukturen in mindestens einer Fertigungsebene aufweist,
- wobei die polarisationsempfindlichen Sensoren unterschiedlicher Ausrichtung aus einer Vielzahl von einzelnen Sensorelementen bestehen, die in einer Matrix angeordnet sind,
- wobei in der integrierten Schaltung Einrichtungen vorhanden sind, die konfiguriert sind, aus den Signalen der polarisationsempfindlichen Sensoren eine Aussage über die Polarisation des einfallenden Lichts zu treffen,
- wobei die Grundelemente mit unterschiedlichen Ausrichtungen (1,2,3,4) in einer 16x16-Matrix angeordnet sind,
- wobei

    a) die Grundelemente in der ersten Zeile der 16x16-Matrix die Anordnung [1,2,4,3,2,1,3,4,

1,2,4,3,2,1,3,4], der zweiten Zeile der 16x16-Matrix die Anordnung [4,3,2,1,3,4,1,2, 4,3,2,1,3,4,1,2], der dritten Zeile der 16x16-Matrix die Anordnung [3,4,1,2,4,3,2,1, 3,4,1,2,4,3,2,1], der vierten Zeile der 16x16-Matrix die Anordnung [2,1,3,4,1,2,4,3, 2,1,3,4,1,2,4,3], der fünften Zeile der 16x16-Matrix die Anordnung [3,4,2,1,4,3,1,2, 3,4,2,1,4,3,1,2], der sechsten Zeile der 16x16-Matrix die Anordnung [1,2,3,4,2,1,4,3, 1,2,3,4,2,1,4,3], der siebten Zeile der 16x16-Matrix die Anordnung [2,1,4,3,1,2,3,4, 2,1,4,3,1,2,3,4], der achten Zeile der 16x16-Matrix die Anordnung [4,3,1,2,3,4,2,1, 4,3,1,2,3,4,2,1], der neunten Zeile der 16x16-Matrix die Anordnung [1,2,4,3,2,1,3,4, 1,2,4,3,2,1,3,4], der zehnten Zeile der 16x16-Matrix die Anordnung [4,3,2,1,3,4,1,2, 4,3,2,1,3,4,1,2], der elften Zeile der 16x16-Matrix die Anordnung [3,4,1,2,4,3,2,1, 3,4,1,2,4,3,2,1], der zwölften Zeile der 16x16-Matrix die Anordnung [2,1,3,4,1,2,4,3, 2,1,3,4,1,2,4,3], der dreizehnten Zeile der 16x16-Matrix die Anordnung [3,4,2,1,4,3,1,2, 3,4,2,1,4,3,1,2], der vierzehnten Zeile der 16x16-Matrix die Anordnung [1,2,3,4,2,1,4,3, 1,2,3,4,2,1,4,3], der fünfzehnten Zeile der 16x16-Matrix die Anordnung [2,1,4,3,1,2,3,4, 2,1,4,3,1,2,3,4], der sechzehnten Zeile der 16x16-Matrix die Anordnung [4,3,1,2,3,4,2,1, 4,3,1,2,3,4,2,1] aufweisen,

oder b) die Grundelemente in der ersten Zeile der 16x16-Matrix die Anordnung [1,2,3,4,2,3,4,1, 1,4,3,2,4,3,2,1], der zweiten Zeile der 16x16-Matrix die Anordnung [4,3,2,1,1,4,3,2, 2,3,4,1,1,2,3,4], der dritten Zeile der 16x16-Matrix die Anordnung [3,4,1,2,4,1,2,3, 3,2,1,4,2,1,4,3], der vierten Zeile der 16x16-Matrix die Anordnung [2,1,4,3,3,2,1,4, 4,1,2,3,3,4,1,2], der fünften Zeile der 16x16-Matrix die Anordnung [4,1,2,3,3,4,1,2, 2,1,4,3,3,2,1,4], der sechsten Zeile der 16x16-Matrix die Anordnung [3,2,1,4,2,1,4,3, 3,4,1,2,4,1,2,3], der siebten Zeile der 16x16-Matrix die Anordnung [2,3,4,1,1,2,3,4, 4,3,2,1,1,4,3,2], der achten Zeile der 16x16-Matrix die Anordnung [1,4,3,2,4,3,2,1, 1,2,3,4,2,3,4,1], der neunten Zeile der 16x16-Matrix die Anordnung [1,4,3,2,4,3,2,1, 1,2,3,4,2,3,4,1], der zehnten Zeile der 16x16-Matrix die Anordnung [2,3,4,1,1,2,3,4, 4,3,2,1,1,4,3,2], der elften Zeile der 16x16-Matrix die Anordnung [3,2,1,4,2,1,4,3, 3,4,1,2,4,1,2,3], der zwölften Zeile der 16x16-Matrix die Anordnung [4,1,2,3,3,4,1,2, 2,1,4,3,3,2,1,4], der dreizehnten Zeile der 16x16-Matrix die Anordnung [2,1,4,3,3,2,1,4, 4,1,2,3,3,4,1,2], der vierzehnten Zeile der 16x16-Matrix die Anordnung [3,4,1,2,4,1,2,3, 3,2,1,4,2,1,4,3], der fünfzehnten Zeile der 16x16-Matrix die Anordnung [4,3,2,1,1,4,3,2, 2,3,4,1,1,2,3,4], der sechzehnten Zeile der 16x16-Matrix die Anordnung [1,2,3,4,2,3,4,1, 1,4,3,2,4,3,2,1], aufweisen,

oder c) die Grundelemente in der ersten Zeile der 16x16-Matrix die Anordnung [1,2,3,4,1,2,3,4, 1,2,3,4,1,2,3,4], der zweiten Zeile der 16x16-Matrix die Anordnung [4,3,2,1,4,3,2,1, 4,3,2,1,4,3,2,1], der dritten Zeile der 16x16-Matrix die Anordnung [3,4,1,2,3,4,1,2, 3,4,1,2,3,4,1,2], der vierten Zeile der 16x16-Matrix die Anordnung [2,1,4,3,2,1,4,3, 2,1,4,3,2,1,4,3], der fünften Zeile der 16x16-Matrix die Anordnung [1,2,3,4,1,2,3,4, 1,2,3,4,1,2,3,4], der sechsten Zeile der 16x16-Matrix die Anordnung [4,3,2,1,4,3,2,1, 4,3,2,1,4,3,2,1], der siebten Zeile der 16x16-Matrix die Anordnung [3,4,1,2,3,4,1,2, 3,4,1,2,3,4,1,2], der achten Zeile der 16x16-Matrix die Anordnung [2,1,4,3,2,1,4,3, 2,1,4,3,2,1,4,3], der neunten Zeile der 16x16-Matrix die Anordnung [1,2,3,4,1,2,3,4, 1,2,3,4,1,2,3,4], der zehnten Zeile der 16x16-Matrix die Anordnung [4,3,2,1,4,3,2,1, 4,3,2,1,4,3,2,1], der elften Zeile der 16x16-Matrix die Anordnung [3,4,1,2,3,4,1,2, 3,4,1,2,3,4,1,2], der zwölften Zeile der 16x16-Matrix die Anordnung [2,1,4,3,2,1,4,3, 2,1,4,3,2,1,4,3], der dreizehnten Zeile der 16x16-Matrix die Anordnung [1,2,3,4,1,2,3,4, 1,2,3,4,1,2,3,4], der vierzehnten Zeile der 16x16-Matrix die Anordnung [4,3,2,1,4,3,2,1, 4,3,2,1,4,3,2,1], der fünfzehnten Zeile der 16x16-Matrix die Anordnung [3,4,1,2,3,4,1,2, 3,4,1,2,3,4,1,2], der sechzehnten Zeile der 16x16-Matrix die Anordnung [2,1,4,3,2,1,4,3, 2,1,4,3,2,1,4,3] aufweisen,

oder d) die Grundelemente in der ersten Zeile der 16x16-Matrix die Anordnung [1,2,3,4,2,1,4,3, 1,2,3,4,2,1,4,3], der zweiten Zeile der 16x16-Matrix die Anordnung [4,3,2,1,3,4,1,2, 4,3,2,1,3,4,1,2], der dritten Zeile der 16x16-Matrix die Anordnung [3,4,1,2,4,3,2,1, 3,4,1,2,4,3,2,1], der vierten Zeile der 16x16-Matrix die Anordnung [2,1,4,3,1,2,3,4, 2,1,4,3,1,2,3,4], der fünften Zeile der 16x16-Matrix die Anordnung [4,3,2,1,3,4,1,2, 4,3,2,1,3,4,1,2], der sechsten Zeile der 16x16-Matrix die Anordnung [1,2,3,4,2,1,4,3, 1,2,3,4,2,1,4,3], der siebten Zeile der 16x16-Matrix die Anordnung [2,1,4,3,1,2,3,4, 2,1,4,3,1,2,3,4], der achten Zeile der 16x16-Matrix die Anordnung [3,4,1,2,4,3,2,1, 3,4,1,2,4,3,2,1], der neunten Zeile der 16x16-Matrix die Anordnung [1,2,3,4,2,1,4,3, 1,2,3,4,2,1,4,3], der zehnten Zeile der 16x16-Matrix die Anordnung [4,3,2,1,3,4,1,2, 4,3,2,1,3,4,1,2], der elften Zeile der 16x16-Matrix die Anordnung [3,4,1,2,4,3,2,1, 3,4,1,2,4,3,2,1], der zwölften Zeile der 16x16-Matrix die Anordnung [2,1,4,3,1,2,3,4, 2,1,4,3,1,2,3,4], der dreizehnten Zeile der 16x16-Matrix die Anordnung [4,3,2,1,3,4,1,2, 4,3,2,1,3,4,1,2], der vierzehnten Zeile der 16x16-Matrix die Anordnung [1,2,3,4,2,1,4,3, 1,2,3,4,2,1,4,3], der fünfzehnten Zeile der 16x16-Matrix die Anordnung [2,1,4,3,1,2,3,4, 2,1,4,3,1,2,3,4], der sechzehnten Zeile der 16x16-Matrix die Anordnung [3,4,1,2,4,3,2,1, 3,4,1,2,4,3,2,1] aufweisen.

Auf alle Ausführungen zu der vorschlagsgemäßen integrierten Schaltung gemäß der ersten Lehre darf verwiesen werden.

Das in den Figuren dargestellte und insoweit bevorzugte Ausführungsbeispiel betrifft außerdem eine integrierte Schaltung zur Messung der Polarisation von Licht

- mit polarisationsempfindlichen Sensoren mit unterschiedlichen Ausrichtungen der Polarisationsebenen als Grundelemente in vier unterschiedlichen Ausrichtungen (1,2,3,4),
- mit sensorischen Elementen, die je mit einem Polarisationsfilter zu einem der polarisationsempfindlichen Sensoren als bauliche Einheit zusammenwirkend angeordnet sind,
- wobei das polarisationsempfindliche Filter des als bauliche Einheit angeordneten polarisationsempfindlichen Sensors eine gezielte Ausdehnung und Orientierung aufweist,
- wobei das Polarisationsfilter mit lithographischen Methoden erzeugte Gitterstrukturen in mindestens einer Fertigungsebene aufweist,
- wobei die polarisationsempfindlichen Sensoren unterschiedlicher Ausrichtung aus einer Vielzahl von einzelnen Sensorelementen bestehen, die in einer Matrix angeordnet sind,
- wobei in der integrierten Schaltung Einrichtungen vorhanden sind, die konfiguriert sind, aus den Signalen der polarisationsempfindlichen Sensoren eine Aussage über die Polarisation des einfallenden Lichts zu treffen,
- wobei die Grundelemente mit unterschiedlichen Ausrichtungen (1,2,3,4) in einer 32x32-Matrix angeordnet sind,
- wobei

a) die Grundelemente in der ersten Zeile die Anordnung [12341234 23412341 12341234 23412341], der zweiten Zeile der 32x32-Matrix die Anordnung [43214321 14321432 43214321 14321432], der dritten Zeile der 32x32-Matrix die Anordnung [34123412 41234123 34123412 41234123], der vierten Zeile der 32x32-Matrix die Anordnung [21432143 32143214 21432143 32143214], der fünften Zeile der 32x32-Matrix die Anordnung [12341234 23412341 12341234 23412341], der sechsten Zeile der 32x32-Matrix die Anordnung [43214321 14321432 43214321 14321432], der siebten Zeile der 32x32-Matrix die Anordnung [34123412 41234123 34123412 41234123], der achten Zeile der 32x32-Matrix die Anordnung [21432143 32143214 21432143 32143214], der neunten Zeile der 32x32-Matrix die Anordnung [41234123 34123412 41234123 34123412], der zehnten Zeile der 32x32-Matrix die Anordnung [32143214 21432143 32143214 21432143], der elften Zeile der 32x32-Matrix die Anordnung [23412341 12341234 23412341 12341234], der zwölften Zeile der 32x32-Matrix die Anordnung [14321432 43214321 14321432 43214321], der 13. Zeile der 32x32-Matrix die Anordnung [41234123 34123412 41234123 34123412], der 14. Zeile der 32x32-Matrix die Anordnung [32143214 21432143 32143214 21432143], der 15. Zeile der 32x32-Matrix die Anordnung [23412341 12341234 23412341 12341234], der 16. Zeile der 32x32-Matrix die Anordnung [14321432 43214321 14321432 43214321], der 17. Zeile der 32x32-Matrix die Anordnung [12341234 23412341 12341234 23412341], der 18. Zeile der 32x32-Matrix die Anordnung [43214321 14321432 43214321 14321432], der 19. Zeile der 32x32-Matrix die Anordnung [34123412 41234123 34123412 41234123], der 20. Zeile der 32x32-Matrix die Anordnung [21432143 32143214 21432143 32143214], der 21. Zeile der 32x32-Matrix die Anordnung [12341234 23412341 12341234 23412341], der 22. Zeile der 32x32-Matrix die Anordnung [43214321 14321432 43214321 14321432], der 23. Zeile der 32x32-Matrix die Anordnung [34123412 41234123 34123412 41234123], der 24. Zeile der 32x32-Matrix die Anordnung [21432143 32143214 21432143 32143214], der 25. Zeile der 32x32-Matrix die Anordnung [41234123 34123412 41234123 34123412], der 26. Zeile der 32x32-Matrix die Anordnung [32143214 21432143 32143214 21432143], der 27. Zeile der 32x32-Matrix die Anordnung [23412341 12341234 23412341 12341234], der 28. Zeile der 32x32-Matrix die Anordnung [14321432 43214321 14321432 43214321], der 29. Zeile der 32x32-Matrix die Anordnung [41234123 34123412 41234123 34123412], der 30. Zeile der 32x32-Matrix die Anordnung [32143214 21432143 32143214 21432143], der 31. Zeile der 32x32-Matrix die Anordnung [23412341 12341234 23412341 12341234], der 32. Zeile der 32x32-Matrix die Anordnung [14321432 43214321 14321432 43214321] aufweisen,

oder b) die Grundelemente in der ersten Zeile der 32x32-Matrix die Anordnung [12342341 14324321 12342341 14324321], der zweiten Zeile der 32x32-Matrix die Anordnung [43211432 23411234 43211432 23411234], der dritten Zeile der 32x32-Matrix die Anordnung [34124123 32142143 34124123 32142143], der vierten Zeile der 32x32-Matrix die Anordnung [21433214 41233412 21433214 41233412], der fünften Zeile der 32x32-Matrix die Anordnung [41233412 21433214 41233412 21433214], der sechsten Zeile der 32x32-Matrix die Anordnung [32142143 34124123 32142143 34124123], der siebten Zeile der 32x32-Matrix die Anordnung [23411234 43211432 23411234 43211432], der achten Zeile der 32x32-Matrix die Anordnung [14324321 12342341 14324321 12342341], der neunten Zeile der 32x32-Matrix die Anordnung [14324321 12342341 14324321 12342341], der zehnten Zeile der 32x32-Matrix die Anordnung [23411234 43211432 23411234 43211432], der elften Zeile der 32x32-Matrix die Anordnung [32142143 34124123 32142143 34124123], der zwölften Zeile der 32x32-Matrix die Anordnung [41233412 21433214 41233412 21433214], der 13. Zeile der 32x32-Matrix die Anordnung [21433214 41233412 21433214 41233412], der 14. Zeile der 32x32-Matrix die Anordnung [34124123 32142143 34124123 32142143], der 15. Zeile der 32x32-Matrix die Anordnung [43211432 23411234 43211432 23411234], der 16. Zeile der 32x32-Matrix die Anordnung [12342341 14324321 12342341 14324321], der 17. Zeile der 32x32-Matrix die Anordnung [12342341 14324321 12342341 14324321], der 18. Zeile der 32x32-Matrix die Anordnung [43211432 23411234 43211432 23411234], der 19. Zeile der 32x32-Matrix die Anordnung [34124123 32142143 34124123 32142143], der 20. Zeile der 32x32-Matrix die Anordnung [21433214 41233412 21433214 41233412], der 21. Zeile der 32x32-Matrix die Anordnung [41233412 21433214 41233412 21433214], der 22. Zeile der 32x32-Matrix die Anordnung [32142143 34124123 32142143 34124123], der 23. Zeile der 32x32-Matrix die Anordnung [23411234 43211432 23411234 43211432], der 24. Zeile der 32x32-Matrix die Anordnung [14324321 12342341 14324321 12342341], der 25. Zeile der 32x32-Matrix die Anordnung [14324321 12342341 14324321 12342341], der 26. Zeile der 32x32-Matrix die Anordnung [23411234 43211432 23411234 43211432], der 27. Zeile der 32x32-Matrix die Anordnung [32142143 34124123 32142143 34124123], der 28. Zeile der 32x32-Matrix die Anordnung [41233412 21433214 41233412 21433214], der 29. Zeile der 32x32-Matrix die Anordnung [21433214 41233412 21433214 41233412], der 30. Zeile der 32x32-Matrix die Anordnung [34124123 32142143 34124123 32142143], der 31. Zeile der 32x32-Matrix die Anordnung [43211432 23411234 43211432 23411234], der 32. Zeile der 32x32-Matrix die Anordnung [12342341 14324321 12342341 14324321] aufweisen,

oder c) die Grundelemente in der ersten Zeile der 32x32-Matrix die Anordnung [12341234 21432143 12341234 21432143], der zweiten Zeile der 32x32-Matrix die Anordnung [43214321 34123412 43214321 34123412], der dritten Zeile der 32x32-Matrix die Anordnung [34123412 43214321 34123412 43214321], der vierten Zeile der 32x32-Matrix die Anordnung [21432143 12341234 21432143 12341234], der fünften Zeile der 32x32-Matrix die Anordnung [12341234 21432143 12341234 21432143], der sechsten Zeile der 32x32-Matrix die Anordnung [43214321 34123412 43214321 34123412], der siebten Zeile der 32x32-Matrix die Anordnung [34123412 43214321 34123412 43214321], der achten Zeile der 32x32-Matrix die Anordnung [21432143 12341234 21432143 12341234], der neunten Zeile der 32x32-Matrix die Anordnung [43214321 34123412 43214321 34123412], der zehnten Zeile der 32x32-Matrix die Anordnung [12341234 21432143 12341234 21432143], der elften Zeile der 32x32-Matrix die Anordnung [21432143 12341234 21432143 12341234], der zwölften Zeile der 32x32-Matrix die Anordnung [34123412 43214321 34123412 43214321], der 13. Zeile der 32x32-Matrix die Anordnung [43214321 34123412 43214321 34123412], der 14. Zeile der 32x32-Matrix die Anordnung [12341234 21432143 12341234 21432143], der 15. Zeile der 32x32-Matrix die Anordnung [21432143 12341234 21432143 12341234], der 16. Zeile der 32x32-Matrix die Anordnung [34123412 43214321 34123412 43214321], der 17. Zeile der 32x32-Matrix die Anordnung [12341234 21432143 12341234 21432143], der 18. Zeile der 32x32-Matrix die Anordnung [43214321 34123412 43214321 34123412], der 19. Zeile der 32x32-Matrix die Anordnung [34123412 43214321 34123412 43214321], der 20. Zeile der 32x32-Matrix die Anordnung [21432143 12341234 21432143 12341234], der 21. Zeile der 32x32-Matrix die Anordnung [12341234 21432143 12341234 21432143], der 22. Zeile der 32x32-Matrix die Anordnung [43214321 34123412 43214321 34123412], der 23. Zeile der 32x32-Matrix die Anordnung [34123412 43214321 34123412 43214321], der 24. Zeile der 32x32-Matrix die Anordnung [21432143 12341234 21432143 12341234], der 25. Zeile der 32x32-Matrix die Anordnung [43214321 34123412 43214321 34123412], der 26. Zeile der 32x32-Matrix die Anordnung [12341234 21432143 12341234 21432143], der 27. Zeile der 32x32-Matrix die Anordnung [21432143 12341234 21432143 12341234], der 28. Zeile der 32x32-Matrix die Anordnung [34123412 43214321 34123412 43214321], der 29. Zeile der 32x32-Matrix die Anordnung [43214321 34123412 43214321 34123412], der 30. Zeile der 32x32-Matrix die Anordnung [12341234 21432143 12341234 21432143], der 31. Zeile der 32x32-Matrix die Anordnung [21432143 12341234 21432143 12341234], der 32. Zeile der 32x32-Matrix die Anordnung [34123412 43214321 34123412 43214321] aufweisen,

oder d) die Grundelemente in der ersten Zeile der 32x32-Matrix die Anordnung [12342341 12342341 12342341 12342341], der zweiten Zeile der 32x32-Matrix die Anordnung [43211432 43211432 43211432 43211432], der dritten Zeile der 32x32-Matrix die Anordnung [34124123 34124123 34124123 34124123], der vierten Zeile der 32x32-Matrix die Anordnung [21433214 21433214 21433214 21433214], der fünften Zeile der 32x32-Matrix die Anordnung [41233412 41233412 41233412 41233412], der sechsten Zeile der 32x32-Matrix die Anordnung [32142143 32142143 32142143 32142143], der siebten Zeile der 32x32-Matrix die Anordnung [23411234 23411234 23411234 23411234], der achten Zeile der 32x32-Matrix die Anordnung [14324321 14324321 14324321 14324321], der neunten Zeile der 32x32-Matrix die Anordnung [12342341 12342341 12342341 12342341], der zehnten Zeile der 32x32-Matrix die Anordnung [43211432 43211432 43211432 43211432], der elften Zeile der 32x32-Matrix die Anordnung [34124123 34124123 34124123 34124123], der zwölften Zeile der 32x32-Matrix die Anordnung [21433214 21433214 21433214 21433214], der 13. Zeile der 32x32-Matrix die Anordnung [41233412 41233412 41233412 41233412], der 14. Zeile der 32x32-Matrix die Anordnung [32142143 32142143 32142143 32142143], der 15. Zeile der 32x32-Matrix die Anordnung [23411234 23411234 23411234 23411234], der 16. Zeile der 32x32-Matrix die Anordnung [14324321 14324321 14324321 14324321], der 17. Zeile der 32x32-Matrix die Anordnung [12342341 12342341 12342341 12342341], der 18. Zeile der 32x32-Matrix die Anordnung [43211432 43211432 43211432 43211432], der 19. Zeile der 32x32-Matrix die Anordnung [34124123 34124123 34124123 34124123], der 20. Zeile der 32x32-Matrix die Anordnung [21433214 21433214 21433214 21433214], der 21. Zeile der 32x32-Matrix die Anordnung [41233412 41233412 41233412 41233412], der 22. Zeile der 32x32-Matrix die Anordnung [32142143 32142143 32142143 32142143], der 23. Zeile der 32x32-Matrix die Anordnung [23411234 23411234 23411234 23411234], der 24. Zeile der 32x32-Matrix die Anordnung [14324321 14324321 14324321 14324321], der 25. Zeile der 32x32-Matrix die Anordnung [12342341 12342341 12342341 12342341], der 26. Zeile der 32x32-Matrix die Anordnung [43211432 43211432 43211432 43211432], der 27. Zeile der 32x32-Matrix die Anordnung [34124123 34124123 34124123 34124123], der 28. Zeile der 32x32-Matrix die Anordnung [21433214 21433214 21433214 21433214], der 29. Zeile der 32x32-Matrix die Anordnung [41233412 41233412 41233412 41233412], der 30. Zeile der 32x32-Matrix die Anordnung [32142143 32142143 32142143 32142143], der 31. Zeile der 32x32-Matrix die Anordnung [23411234 23411234 23411234 23411234], der 32. Zeile der 32x32-Matrix die Anordnung [14324321 14324321 14324321 14324321] aufweisen,

oder e) die Grundelemente in der ersten Zeile der 32x32-Matrix die Anordnung [12342143 12342143 12342143 12342143], der zweiten Zeile der 32x32-Matrix die Anordnung [43213412 43213412 43213412 43213412], der dritten Zeile der 32x32-Matrix die Anordnung [34124321 34124321 34124321 34124321], der vierten Zeile der 32x32-Matrix die Anordnung [21431234 21431234 21431234 21431234], der fünften Zeile der 32x32-Matrix die Anordnung [43213412 43213412 43213412 43213412], der sechsten Zeile der 32x32-Matrix die Anordnung [12342143 12342143 12342143 12342143], der siebten Zeile der 32x32-Matrix die Anordnung [21431234 21431234 21431234 21431234], der achten Zeile der 32x32-Matrix die Anordnung [34124321 34124321 34124321 34124321], der neunten Zeile der 32x32-Matrix die Anordnung [12342143 12342143 12342143 12342143], der zehnten Zeile der 32x32-Matrix die Anordnung [43213412 43213412 43213412 43213412], der elften Zeile der 32x32-Matrix die Anordnung [34124321 34124321 34124321 34124321], der zwölften Zeile der 32x32-Matrix die Anordnung [21431234 21431234 21431234 21431234], der 13. Zeile der 32x32-Matrix die Anordnung [43213412 43213412 43213412 43213412], der 14. Zeile der 32x32-Matrix die Anordnung [12342143 12342143 12342143 12342143], der 15. Zeile der 32x32-Matrix die Anordnung [21431234 21431234 21431234 21431234], der 16. Zeile der 32x32-Matrix die Anordnung [34124321 34124321 34124321 34124321], der 17. Zeile der 32x32-Matrix die Anordnung [12342143 12342143 12342143 12342143], der 18. Zeile der 32x32-Matrix die Anordnung [43213412 43213412 43213412 43213412], der 19. Zeile der 32x32-Matrix die Anordnung [34124321 34124321 34124321 34124321], der 20. Zeile der 32x32-Matrix die Anordnung [21431234 21431234 21431234 21431234], der 21. Zeile der 32x32-Matrix die Anordnung [43213412 43213412 43213412 43213412], der 22. Zeile der 32x32-Matrix die Anordnung [12342143 12342143 12342143 12342143], der 23. Zeile der 32x32-Matrix die Anordnung [21431234 21431234 21431234 21431234], der 24. Zeile der 32x32-Matrix die Anordnung [34124321 34124321 34124321 34124321], der 25. Zeile der 32x32-Matrix die Anordnung [12342143 12342143 12342143 12342143], der 26. Zeile der 32x32-Matrix die Anordnung [43213412 43213412 43213412 43213412], der 27. Zeile der 32x32-Matrix die Anordnung [34124321 34124321 34124321 34124321], der 28. Zeile der 32x32-Matrix die Anordnung [21431234 21431234 21431234 21431234], der 29. Zeile der 32x32-Matrix die Anordnung [43213412 43213412 43213412 43213412], der 30. Zeile der 32x32-Matrix die Anordnung [12342143 12342143 12342143 12342143], der 31. Zeile der 32x32-Matrix die Anordnung [21431234 21431234 21431234 21431234], der 32. Zeile der 32x32-Matrix die Anordnung [34124321 34124321 34124321 34124321] aufweisen.

Auf alle Ausführungen zu der vorschlagsgemäßen integrierten Schaltung gemäß der ersten Lehre und der vorschlagsgemäßen integrierten Schaltung gemäß der zweiten Lehre darf verwiesen werden.

Weiter ist hier und vorzugsweise vorgesehen, dass das Polarisationsfilter mit lithographischen Methoden erzeugte Gitterstrukturen in mindestens einer Fertigungsebene und/oder Verdrahtungsebene aufweist, wobei zwischen den Bereichen mit Gitterstrukturen lichtundurchlässige Wände vorhanden sind, die bei schrägem Lichteinfall eine Beeinflussung benachbarter Sensoren unterbinden, wobei die lichtundurchlässigen Wände durch Vias bzw. Kontakte hergestellt sind.

Die nachfolgenden Ausführungen lassen sich auf Anordnungen mit unterschiedlich vielen voneinander verschiedenen Grundelementen übertragen, etwa Systemen mit 2 Grundelementen (differentieller Sensor oder Transistoren eines Differenzverstärkers) oder auch mehr als 4 Grundelementen. Die so erzeugten Muster unterscheiden sich dabei zwar, die Methodik der Erzeugung bleibt jedoch dieselbe. Im Folgenden werden beispielhaft Anordnungen von 4 verschiedenen Grundelementen betrachtet, da diese für zahlreiche Anwendungen interessant sind. Neben der Polarisationsmessung mit 4 Quadranten zur Erzeugung eines differentiellen Quadratursignals sind etwa vergleichbare Anordnungen mit magnetoresistiven Sensoren denkbar. Auch Farbsensoren mit z.B. einer Bayer-Matrix fallen in dieses Schema.

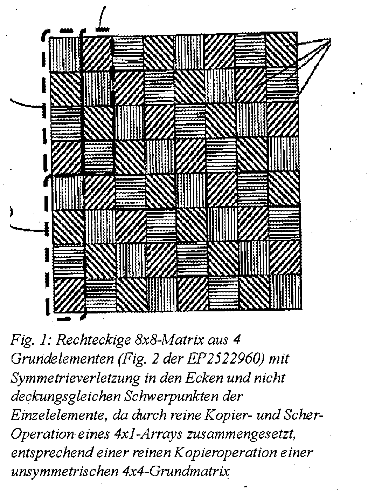

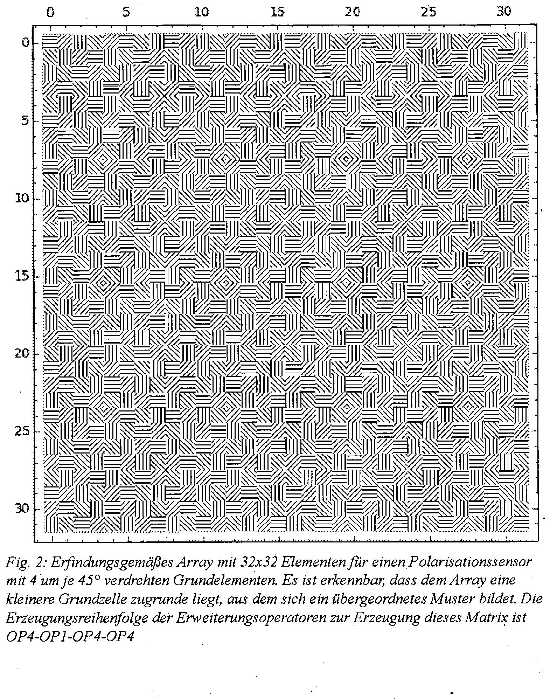

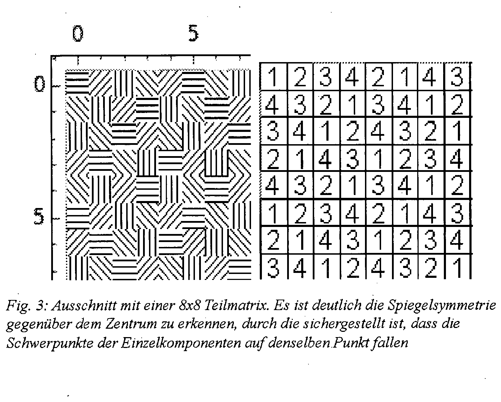

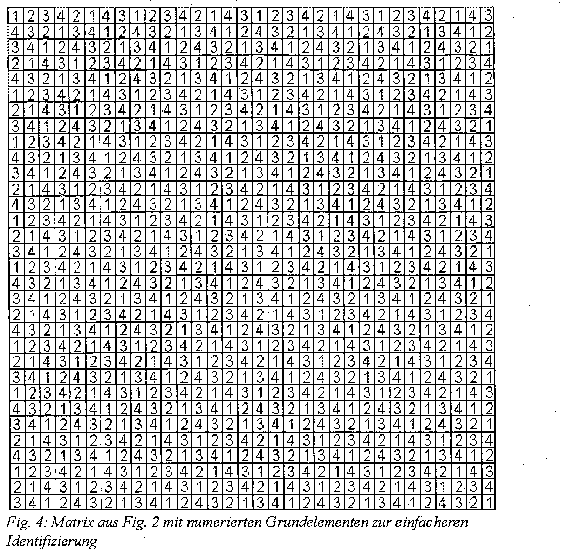

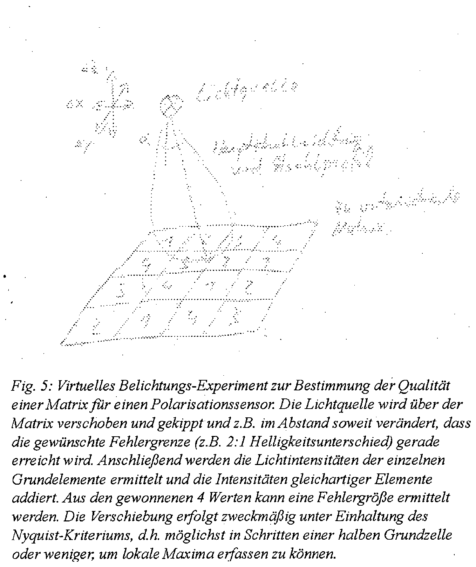

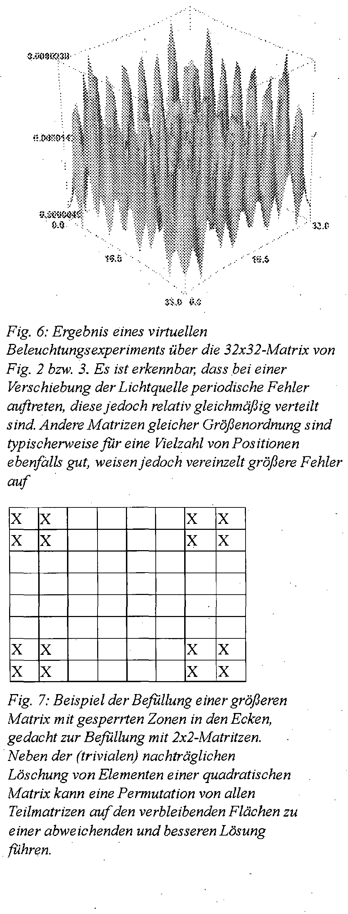

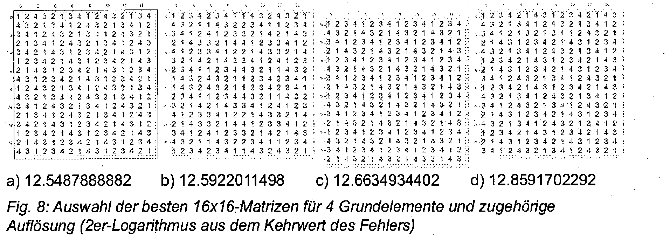

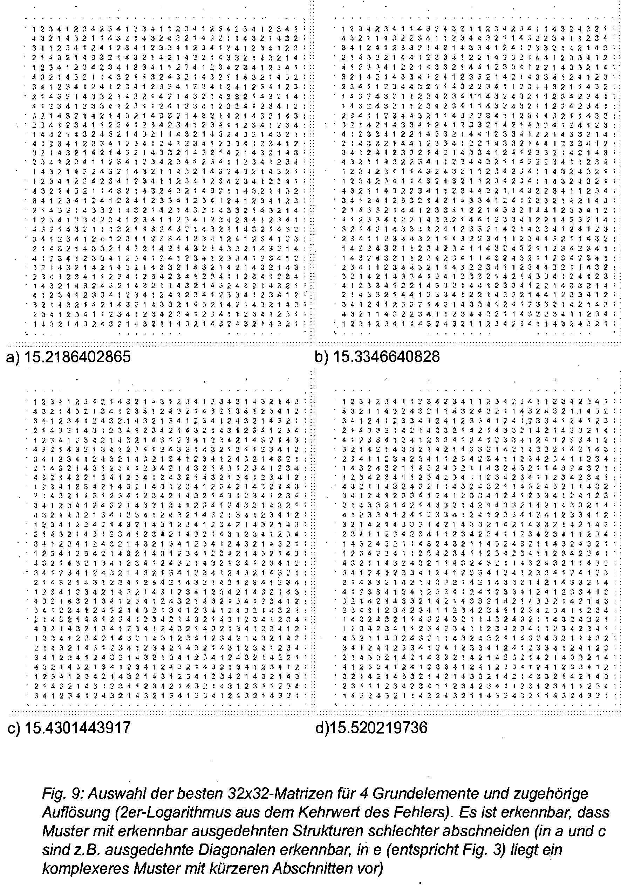

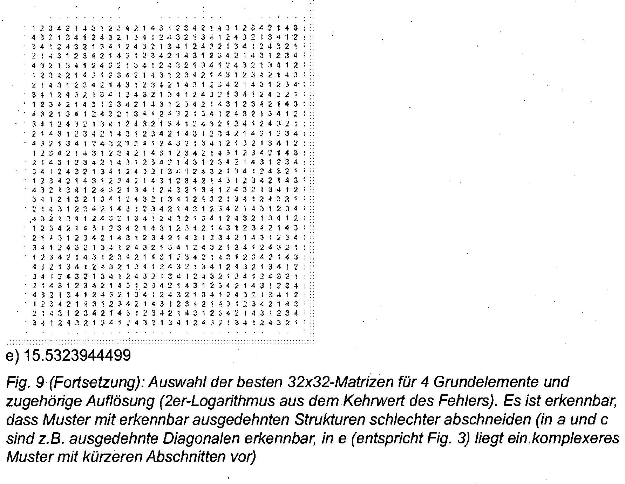

Eine Anordnung von 4 Grundelementen bzw. Einzelsensoren kann linear oder in einer 2x2-Matrix erfolgen. Um die Auswirkungen von Gradienten zu minimieren, ist eine möglichst kompakte Anordnung vorteilhaft, so dass die 2x2-Anordnung (Grundmatrix) bevorzugt wird. Eine größere Anordnung dieser Grundelemente kann nun leicht durch wiederholte Anordnung derselben Grundmatrix erzeugt werden (siehe Fig. 1, die der Fig. 2 in EP 2522960 A1 entspricht). Diese hat bereits bessere Eigenschaften als z.B. eine einzelne Grundmatrix größerer Gesamtfläche, weist aber systematische Fehler auf. So ist insbesondere der Lageschwerpunkt der einzelnen Grundelemente voneinander verschieden, so dass bei ungleichmäßiger Beleuchtung eines optischen Sensors ein Restfehler bestehen bleibt. In Fig. 1 ist dies in den Ecken leicht zu sehen, da die Elemente links oben und rechts unten identisch sind, während rechts oben und links unten jeweils andere Elemente platziert sind.

Auch durch lineare Verschiebungen in Bruchteilen der Grundmatrix lässt sich dieses Problem nicht beheben, da es sich letztlich nur um eine Überlagerung oder Scherung dieser regelmäßigen Matrix mit gleichartigen Fehlern handelt. Dies ist in Fig. 1 ebenfalls leicht erkennbar, denn die markierte 4x1-Grundmatrix wurde unter 4-zeiliger identischer Kopie und spaltenweiser Kopie mit 1/4-Verschiebung zu einer 8x8-Matrix zusammengesetzt. Die so entstandene Matrix hat längs ihrer beiden Diagonalen unterschiedliche Eigenschaften.

Es wird folglich eine Anordnung benötigt, die derartige systematische Fehler reduziert. Dazu ist offensichtlich eine möglichst große Zahl von möglichst kleinen Grundelementen vorteilhaft. Dabei entsteht zunächst ein Problem mit extrem großer Zahl von möglichen Lösungen. Gehen wir von 4 Grundelementen aus, die zu einer Matrix mit 32x32=1024 Elementen angeordnet werden, so liegt diese Zahl bereits bei $4^{1024}$. Natürlich sind die meisten dieser möglichen Anordnungen unzweckmäßig. So ist für die Erzeugung eines differentiellen Quadratursignals naheliegend, dass alle 4 Grundelemente gleich häufig vorkommen. Ebenfalls unzweckmäßig sind Lösungen, bei denen je eines der Grundelemente in überwiegend einer Ecke des Arrays liegen. Die einfache periodische Anordnung der Grundelemente hat aber wie bereits ausgeführt ebenfalls Nachteile, etwa fehlende Spiegelsymmetrie, Rotationssymmetrie und insbesondere abweichende Lageschwerpunkte der Grundelemente. Die Optimierung eines solchen Arrays ist daher ein komplexes Problem, zu dessen Lösung mit endlichen Ressourcen eine systematische Herangehensweise und genaue Untersuchung der Eigenschaften aller gefundenen Kandidaten erforderlich ist.

Dazu wird zunächst eine Grundmatrix erzeugt, die alle N Grundelemente beinhaltet. Ausgehend von dieser Grundmatrix werden sukzessive komplexere Anordnungen erzeugt und optimale Kandidaten aus diesen ausgewählt, bis eine ausreichende Zerlegung mit ausreichender Genauigkeit gegenüber einem vorbestimmten Testszenario erreicht ist.

Für den Fall einer gaussförmigen Helligkeitsverteilung, die über der gesamten Fläche einen Faktor 2 Unterschied zwischen Maximum und Minimum nicht überschreitet, die ansonsten aber jede Lage über dem Sensor einnehmen kann, ergibt sich für eine Anordnung von 4 Grundelementen, dass eine Genauigkeit von gut 12 bit mit einer Anordnung von mindestens 16x16 Grundelementen erzielt werden kann, während für knapp 16 bit eine Anordnung von mindestens 32x32 Grundelementen erforderlich ist.

Die einfachste Anordnung von vier Einzelsensoren, die zwei differentielle Signalpaare geben, ist eine 2x2-Matrix, wobei die je ein differentielles Paar bildenden Sensorpaare (1,3) und (2,4) möglichst so angeordnet sind, dass sie einen gemeinsamen Schwerpunkt haben. In diesem Fall führt eine radialsymmetrische Beleuchtung, die auf diesen Schwerpunkt ausgerichtet ist, nicht zu helligkeitsbedingten Fehlern. Die Anordnung lässt sich demnach als $\begin{pmatrix} 1 & 2 \\ 4 & 3 \end{pmatrix}$ beschreiben, wobei alle Rotationen und Spiegelungen dieser Matrix gleichwertig sind.

Eine lineare Anordnung dieser Grundelemente, die ebenfalls einen gemeinsamen Schwerpunkt aufweist, ist (1 2 4 3) oder (2 1 3 4), wobei auch hier Rotation und Spiegelung keine Rolle spielt. Die 2x2-Matrix-Anordnung ist den linearen Anordnung jedoch überlegen, weil typische Signalquellen bzw. Lichtquellen am ehesten als Punktquelle beschrieben werden können. Bei einem für Punktquellen typischen radialen Abfall der Signalintensität ist bei einer linearen Anordnung das jeweils äußere Sensorpaar benachteiligt. Dieser Nachteil entfällt bei der 2x2-Matrix-Anordnung. Größere Grundzellen mit leeren Zellen oder mehreren Einzelelementen gleichen Typs können auch verwendet werden, für den hier beschriebenen Fall ergeben sich daraus allerdings keine Vorteile.

Diese einfachen Anordnungen (Grundmatrizen) haben den Nachteil, selbst lineare Gradienten nicht kompensieren zu können. Zur Realisierung eines Differenzverstärkers mit Transistoren A und B verwendet der Fachmann hierzu entweder Anordnungen (A B B A) oder $\begin{pmatrix} A & B \\ B & A \end{pmatrix}$, bei denen die Transistoren in kleinere Teile zerlegt und so angeordnet werden, dass jeweils ein Element stärker und eines schwächer betroffen ist. Unter der Annahme, dass die Wirkung parallelgeschalteter Elemente durch eine lineare Operation (Summensignal) beschrieben werden kann, werden lineare Gradienten effektiv kompensiert. Wir wollen dies hier jedoch mit beispielsweise 4 Grundelementen bewerkstelligen. Das Prinzip des Matching für differentielle Paare ist daher nicht ganz einfach zu übertragen. Insbesondere ist das Kopieren der oben genannten 2x2-Grundmatrix bzw.

Einheitszelle $EZ = \begin{pmatrix} 1 & 2 \\ 4 & 3 \end{pmatrix}$ zu einer 4x4-Matrix nicht sinnvoll, da hierbei der gemeinsame Schwerpunkt entfällt. Es sollte daher zusätzlich eine Spiegelung oder Rotation einiger Grundmatrizen erfolgen, um den gemeinsamen Schwerpunkt zu erhalten, da sonst die Toleranz gegen radialsymmetrische Intensitätsprofile gestört würde.

Aus dieser Erläuterung ist bereits zu ersehen, dass eine weitere Vergrößerung der Matrix insbesondere in binären Schritten (Verdopplung der Elementezahl in jeder Dimension) aus den zuvor gebildeten kleineren Einheiten zu guten Ergebnissen führt, da auf diese Weise relativ einfach die bestehende Toleranz gegen bestimmte Effekte beibehalten und durch weitere Vorteile erweitert werden kann, da bereits bestehende Symmetrien um zusätzliche, komplexer werdende Symmetrien auf verschiedenen Skalen ergänzt werden.

Auch die Wiederholung von so gebildeten Teilmatrizen an verschiedenen Stellen einer Gesamtmatrix trägt dazu bei, dass die Gesamtmatrix unempfindlicher gegenüber Signalmaxima an verschiedenen Stellen der Matrix wird, da schon für jede Teilmatrix ein Punkt existiert, der unempfindlich gegenüber radialsymmetrischen Fehlern ist. In Randbereichen sollten alle Grundelemente gleichermaßen vertreten sein, um lineare Gradienten zu kompensieren. Für eine bestimmte Zahl von Grundelementen ergibt sich eine Art idealer Grundmatrix mit maximaler Symmetrie, ab der größere Matrizen auch durch Kopieren erzeugt werden können. Im Fall der 4 Grundelemente, die zwei differentielle Paare bilden, ist eine 8x8-Matrix eine solche Grundanordnung. Es kann verschiedene solcher Grundanordnungen geben, die sehr ähnliche Eigenschaften aufweisen.

Sofern an die Gesamtmatrix besondere Anforderungen an ihre Form gestellt werden, können einzelne Positionen der Gesamtmatrix als gesperrt gekennzeichnet werden, d.h. sie bleiben unbesetzt bzw. die freigehaltenen Flächen werden anders genutzt. Auf diese Weise kann z.B. in einer freien Zone im Zentrum eines optischen Sensors eine Lichtquelle positioniert werden (z.B. LED-on-chip), so dass die Lichtquelle exakt im Zentrum des Sensors liegt. Dies bietet sich z.B. in Verbindung mit GaN-on-Si oder auch mit Mikro-Transfer-Printing an. Um die Optimierung möglichst nicht zu stören, sollten dabei mindestens jeweils Teilbereiche von der Größe der Grundmatrix ausgespart werden.

Nur bei sehr kleinen Matrizen kann man Verteilungen noch sinnvoll per "brute force" erzeugen und analysieren, also z.B. alle möglichen sinnvollen Permutationen durchspielen. Man kann auf diese Weise z.B. nachträglich den Beweis erbringen, dass es keine bessere als die zuvor optimierte Teilmatrix gibt, sofern diese klein genug (z.B. 4x4) ist.

Zur Bildung größerer Matrizen können wiederholt Grundoperationen wie Kopieren, Rotieren und Spiegeln auf die Grundmatrix oder Teilmatrix angewendet werden. Durch sukzessive Analyse der so jeweils neu gebildeten Matrizen werden die besten Kandidaten ermittelt und aus diesen bei Bedarf wiederum eine größere Matrix gebildet. Nach diesem Schema ist die Optimierung von Matrizen selbst mit 32x32=1024 oder mehr Elementen mit akzeptabler Rechenzeit realisierbar, obwohl alle möglichen Permutationen mit $4^{1024}$ unüberschaubar zahlreich sind. Gerade bei komplexeren Formen der Gesamtmatrix (etwa mit freien Stellen im Zentrum oder in den Ecken) ist eine Vorgehensweise sinnvoll, bei der kleinere Matrizen (die Grundmatrix selbst oder zusammengesetzte Matrizen niedriger Ordnung) auf der größeren Zielmatrix platziert werden, statt sukzessive eine binäre Vergrößerung mit der jeweils zuvor gebildeten Matrix zu erzeugen. Bei der Platzierung von Teilmatrizen in einer neu zu bildenden größeren Matrix kann von vorne herein auf Symmetrien geachtet werden, um die Zahl von virtuellen Experimenten zu reduzieren. Die nachfolgende Analyse jeder neu gebildeten Matrix wird in jedem Fall Anordnungen mit schlechter Symmetrie eliminieren, da diese bei ungleichförmiger Ausleuchtung zwangsläufig zu größeren Messfehlern führen.

Um eine nach diesem Schema gebildete Teil- oder Gesamtmatrix auf ihre Tauglichkeit zu analysieren, wird mindestens ein realistisches Intensitätsprofil (z.B. das Strahlprofil einer LED) bestimmt und ein virtuelles Belichtungsexperiment durchgeführt, bei dem z.B. die Position der Lichtquelle oder ihre Ausrichtung gegenüber dem Sensor verändert wird. Dabei sind gewisse vorzugebende Grenzen einzuhalten bzw. einzustellen, etwa das Maß der Verschiebung und das Maß der Intensitätsänderung über dem gesamten Sensorarray. Für jede mögliche Beleuchtungssituation im virtuellen Experiment wird das Gesamtsignal (z.B. jeweils die Summe der Signale aller gleichartigen Sensorfelder) bestimmt und die relative Abweichung zueinander ermittelt. Der daraus ermittelte schlechteste Wert (die größte Abweichung) bestimmt dabei die maximale Genauigkeit, die der Sensor unter den gewählten Umständen gewährleisten kann. Verschiedene Matrizen können so miteinander verglichen werden, wobei aus den jeweils Besten sukzessive weiter vergrößerte Matrizen erzeugt werden können. Hierbei wird vorausgesetzt, dass sich die Fehler einer schlechten kleinen Matrix nicht in einen Vorteil für eine daraus gebildete größere Matrix verwandeln, die aus diesen gebildet wird.

Für die ermittelten summarischen Intensitäten $I_1$ bis $I_4$ der verteilten Grundelemente 1..4 ergibt sich ein verwertbares Fehlersignal z.B. daraus, dass man $(\max(I_1, .., I_4) - \min(I_1, .., I_4))/\text{average}(I_1, .., I_4)$ bestimmt, das im Idealfall 0 ist und im Fehlerfall positiv. Dieser so ermittelte relative Fehler kann in erster Näherung bereits für die Abschätzung z.B. der Winkelgenauigkeit eines Polarisations-Winkelsensors herangezogen werden. Ein Wert von 1% korrespondiert grob mit 7 bit oder knapp 2°.

Anstelle des virtuellen Belichtungsexperiments können im Falle magnetischer Sensoren oder z.B. Transistoranordnungen natürlich sinngemäß andere Experimente gleichwertig durchgeführt werden. So könnte etwa auch eine Wärmeverteilung oder ein herstellungsbedingter Gradient in Fertigungsparametern anstelle der angenommenen Belichtung herangezogen werden. An der Systematik ändert sich hierdurch nichts, bei Annahme anderer Profile können sich jedoch andere Matrizen als Optimum einstellen als im Falle einer angenommenen LED-Beleuchtung.

Grundsätzlich gibt es den Trend, dass eine größere Zahl von Einzelelementen auf gleicher Fläche zu einem deutlich kleineren Fehler führt. Eine Vervierfachung ihrer Anzahl auf gleicher Fläche führt in den untersuchten Fällen zu einem Genauigkeitsgewinn von knapp 2,7 Bit. Allerdings ist zu berücksichtigen, dass die Elemente untereinander isoliert und verdrahtet werden müssen, so dass unter Einhaltung einer Mindestgröße für die Einzelelemente eine Steigerung ihrer Anzahl letztlich auch mit einer Steigerung der Gesamtfläche einhergehen kann. In diesem Fall ist zusätzlich zu klären, ob eine insgesamt größere Gesamtmatrix nicht größeren Gradienten ausgesetzt ist als eine kleinere Matrix, so dass rechnerische Gewinne aus der Optimierung sich womöglich praktisch nicht realisieren lassen. Beispielsweise ist bei gegebenem geringem Abstand zwischen Lichtquelle und Sensor mit vorgegebenem Strahlprofil der LED klar, dass eine zu groß gewählte Sensorfläche gar nicht voll ausgeleuchtet werden kann. In diesem Fall könnte in der Anwendung das zuvor bei der Optimierung gewählte Kriterium (z.B. Faktor 2 Helligkeitsunterschied) nicht eingehalten werden.

Die Synthese von geeigneten Teilmatrizen kann systematisch durchgeführt werden. Es ergeben sich zunächst geeignete Arraystrukturen, wenn quadratische Einzelelemente in einer Anordnung mit möglichst vielen Symmetrien angeordnet werden. Es ist also zweckmäßig, Punkt- Achsen-, Spiegel- und Rotationssymmetrien zu kombinieren, soweit möglich. Dies kann an bestimmten Stellen, etwa im Zentrum, zu Problemen führen. Daher ist es u.U. zweckmäßig, einzelne Positionen im Array unberücksichtigt zu lassen bzw. durch andere Funktionen zu füllen. Dies gilt neben dem Zentrum auch für die Ecken einer quadratischen Matrix. Die gegenüberliegenden Ecken würden im Falle einer nicht zentrierten Beleuchtung eine maximal abweichende Lichtintensität aufweisen und können daher in besonderem Maße zu Messfehlern beitragen. Während also die Grundeinheit des Sensors (die Einheitszelle EZ) aus 4 Einzelsensoren am ehesten durch eine quadratische Matrix gebildet werden kann, kann ein größeres Array sich eher an einer angenäherten Kreisform orientieren, d.h. die Ecken können ungenutzt bleiben oder durch andere Funktionen gefüllt werden. Dies gelingt besonders gut mit Arrays hoher Ordnung.

Die Konstruktion von sukzessive größeren Matrizen aus einer gegebenen Grundmatrix oder Einheitszelle kann mit Hilfe von einfachen Grundoperationen geschehen. Diese sind z.B. vertikale und horizontale Spiegelung, diagonale Spiegelung über beide Diagonalen sowie 90°-Rotation der Elemente (Transposition).

$$M=\begin{bmatrix} a_{11} & a_{12} \\ a_{21} & a_{22} \end{bmatrix}$$

Aus einer Grundmatrix er-geben sich durch ggfs. sukzessive Anwendung von Modifikationsoperatoren verschiedene Varianten der Grundmatrix, aus denen durch Erweiterungsoperatoren größere Matrizen gebildet werden können. Geeignete Modifikationsoperatoren sind für eine Einheitszelle aus 4 Elementen etwa:

Spiegelung an der Horizontalen (up-dn-flip):

$$getFlippedUpDown(M)=\begin{bmatrix} a_{21} & a_{22} \\ a_{11} & a_{12} \end{bmatrix}$$

Spiegelung an der Vertikalen (left-right-flip):

$$getFlippedLeftRight(M)=\begin{bmatrix} a_{12} & a_{11} \\ a_{22} & a_{21} \end{bmatrix}$$

Diagonale Spiegelung (diagonal flip):

$$getFlippedDiag(M)=\begin{bmatrix} a_{22} & a_{21} \\ a_{12} & a_{11} \end{bmatrix}$$

Rechtsdrehung (turn):

$$turnMatrixRight(M)=\begin{bmatrix} a_{21} & a_{11} \\ a_{22} & a_{12} \end{bmatrix}$$

(erste Zeile wird zur letzten Spalte. zweite Zeile zur vorletzten Spalte usw. bis letzte Zeile zur ersten Spalte).

Aus einer Ausgangsmatrix EZ mit n*n Elementen kann nun z.B. einfach eine neue Matrix M mit 2n*2n Elementen erzeugt werden, indem man Erweiterungsoperatoren anwendet. Die Erweiterungsoperatoren füllen die neue Matrix mit Varianten der Ausgangsmatrix (M1..M4) unter Anwendung der Modifikationsoperatoren. Beispielhaft seien einige Erweiterungsoperatoren aufgeführt:

$$M=OP(EZ)=\begin{bmatrix} M1 & M2 \\ M3 & M4 \end{bmatrix}.$$

Im ersten Schritt hat die Ausgangsmatrix die Dimension der Grundmatrix (z.B. 2x2 für 4 Grundelemente). In nachfolgenden Schritten wird stattdessen die beste der ermittelten neuen Matrizen als neue Ausgangsmatrix verwendet, so dass man z.B. in 4 Durchläufen auf eine Matrix mit 32x32 Grundelementen kommen kann.

mit der Einheitszelle bzw. Grundmatrix EZ und den durch Grundoperatoren (OP) aus der Einheitszelle veränderten Matrizen M1-M4. Sinnvolle Operatoren sind z.B.

Erweiterungsoperator OP1:
{M1=EZ, M2=vertikal gespiegelte EZ, M3=horizontal gespiegelte EZ, M4=diagonal gespiegelte EZ}

Erweiterungsoperator OP2:
{M1=EZ, M2=EZ, M3=EZ, M4=EZ}

Erweiterungsoperator OP3: (Drehung um 90°, durchgehend im oder durchgehend gegen den Uhrzeigersinn)
{M1=EZ, M2=gedrehte M1, M4 = gedrehte M2, M3=gedrehte M4}

Erweiterungsoperator OP4:
{M1=EZ, M2=diagonal gespiegelte EZ, M3=diagonal gespiegelte EZ, M4=EZ}

Da nicht offensichtlich ist, welche Operatoren an welcher Stelle zum besten Ergebnis führen, ist eine systematische Erzeugung und Analyse erforderlich. Dies führt zu einer weiterhin großen Zahl von Experimenten (einige zigtausend Varianten und nachfolgende virtuelle Belichtungsexperimente zur Ermittlung einer optimalen 32x32-Matrix), die jedoch auf gängigen Computern in überschaubarer Zeit abgearbeitet werden können.

Es sei darauf hingewiesen, dass auf verschiedenem Weg (mit verschiedenen Operatoren) erzeugte Matrizen gleichwertige Ergebnisse liefern können, auch wenn sie auf den ersten Blick anders aussehen. Das liegt daran, dass prinzipiell typgleiche Sensorfelder untereinander ausgetauscht werden können, insbesondere können diejenigen Grundelemente, die zu einem differentiellen Paar gehören, untereinander vertauscht werden - eine kreuzweise Vertauschung von Grundelementen eines I- und eines Q-Signals ist dagegen nicht zweckmäßig. Des weiteren sind die durch Rotation entstehenden Kopien mit dem Original gleichwertig. Auch Verschiebungsoperationen zumindest um Vielfache der Grundzelle sind meist unschädlich.

Grundsätzlich kann die Vorgehensweise weiter verallgemeinert werden, also auf nichtquadratische Matrizen angewendet werden bzw. die Erweiterung auch in größeren und nichtbinären Schritten durchgeführt werden. Die hier vorgestellte Variante mit quadratischen Matrizen und binärer Erweiterung ist allerdings besonders einfach umzusetzen.

Auch die in Fig. 1 (Stand der Technik) gezeigte 8x8-Matrix kann auf die hier beschriebene Art aus einer kleineren Grundmatrix erzeugt werden. Offensichtlich ist eine 4x4-Matrix die Größe, ab der sich größere Matrizen durch einfaches Kopieren (OP2) erzeugen lassen. Diese 4x4-Matrix lässt sich allerdings nicht aus identischen 2x2-Matritzen bilden, da beliebige 2x2-Matritzen in Fig. 1 nicht alle 4 Grundelemente beinhalten. Dies steht im Widerspruch zum Ansatz, dass alle Elemente möglichst dicht beieinander liegen sollen. Es wäre allerdings denkbar und auch im Sinne dieser Erfindung, eine 8x8-Matrix oder größere Matrix durch geeignete Operatoren aus derselben 4x4-Grundmatrix zu erzeugen. So würde man unter Anwendung von z.B. OP1 eine vorteilhaftere 8x8-Matrix erhalten, für die zumindest im größeren Maßstab Spiegelsymmetrie besteht und folglich auch die Schwerpunkte der Einzelelemente wieder übereinander fallen.

## Patentansprüche

1.  Integrierte Schaltung zur Messung der Polarisation von Licht

    - mit polarisationsempfindlichen Sensoren mit unterschiedlichen Ausrichtungen der Polarisationsebenen als Grundelemente in vier unterschiedlichen Ausrichtungen (1,2,3,4),
    - mit sensorischen Elementen, die je mit einem Polarisationsfilter zu einem der polarisationsempfindlichen Sensoren als bauliche Einheit zusammenwirkend angeordnet sind,
    - wobei das polarisationsempfindliche Filter des als bauliche Einheit angeordneten polarisationsempfindlichen Sensors eine gezielte Ausdehnung und Orientierung aufweist,
    - wobei das Polarisationsfilter mit lithographischen Methoden erzeugte Gitterstrukturen in mindestens einer Fertigungsebene aufweist,
    - wobei die polarisationsempfindlichen Sensoren unterschiedlicher Ausrichtung aus einer Vielzahl von einzelnen Sensorelementen bestehen, die in einer Matrix angeordnet sind,
    - wobei in der integrierten Schaltung Einrichtungen vorhanden sind, die konfiguriert sind, aus den Signalen der polarisationsempfindlichen Sensoren eine Aussage über die Polarisation des einfallenden Lichts zu treffen,
    - wobei die Grundelemente mit unterschiedlichen Ausrichtungen (1,2,3,4) in einer 8x8-Matrix angeordnet sind,
    - wobei die Grundelemente in der ersten Zeile der 8x8-Matrix die Anordnung [1,2,3,4,2,1,4,3], der zweiten Zeile der 8x8-Matrix die Anordnung [4,3,2,1,3,4,1,2], der dritten Zeile der 8x8-Matrix die Anordnung [3,4,1,2,4,3,2,1], der vierten Zeile der 8x8-Matrix die Anordnung [2,1,4,3,1,2,3,4], der fünften Zeile der 8x8-Matrix die Anordnung [4,3,2,1,3,4,1,2], der sechsten Zeile der 8x8-Matrix die Anordnung [1,2,3,4,2,1,4,3], der siebten Zeile der 8x8-Matrix die Anordnung [2,1,4,3,1,2,3,4] und der achten Zeile der 8x8-Matrix die Anordnung [3,4,1,2,4,3,2,1] aufweisen.

2.  Integrierte Schaltung zur Messung der Polarisation von Licht

    - mit polarisationsempfindlichen Sensoren mit unterschiedlichen Ausrichtungen der Polarisationsebenen als Grundelemente in vier unterschiedlichen Ausrichtungen (1,2,3,4),
    - mit sensorischen Elementen, die je mit einem Polarisationsfilter zu einem der polarisationsempfindlichen Sensoren als bauliche Einheit zusammenwirkend angeordnet sind,
    - wobei das polarisationsempfindliche Filter des als bauliche Einheit angeordneten polarisationsempfindlichen Sensors eine gezielte Ausdehnung und Orientierung aufweist,
    - wobei das Polarisationsfilter mit lithographischen Methoden erzeugte Gitterstrukturen in mindestens einer Fertigungsebene aufweist,
    - wobei die polarisationsempfindlichen Sensoren unterschiedlicher Ausrichtung aus einer Vielzahl von einzelnen Sensorelementen bestehen, die in einer Matrix angeordnet sind,
    - wobei in der integrierten Schaltung Einrichtungen vorhanden sind, die konfiguriert sind, aus den Signalen der polarisationsempfindlichen Sensoren eine Aussage über die Polarisation des einfallenden Lichts zu treffen,
    - wobei die Grundelemente mit unterschiedlichen Ausrichtungen (1,2,3,4) in einer 16x16-Matrix angeordnet sind,
    - wobei

        a) die Grundelemente in der ersten Zeile der 16x16-Matrix die Anordnung [1,2,4,3,2,1,3,4, 1,2,4,3,2,1,3,4], der zweiten Zeile der 16x16-Matrix die Anordnung [4,3,2,1,3,4,1,2, 4,3,2,1,3,4,1,2], der dritten Zeile der 16x16-Matrix die Anordnung [3,4,1,2,4,3,2,1, 3,4,1,2,4,3,2,1], der vierten Zeile der 16x16-Matrix die Anordnung [2,1,3,4,1,2,4,3, 2,1,3,4,1,2,4,3], der fünften Zeile der 16x16-Matrix die Anordnung [3,4,2,1,4,3,1,2, 3,4,2,1,4,3,1,2], der sechsten Zeile der 16x16-Matrix die Anordnung [1,2,3,4,2,1,4,3, 1,2,3,4,2,1,4,3], der siebten Zeile der 16x16-Matrix die Anordnung [2,1,4,3,1,2,3,4, 2,1,4,3,1,2,3,4], der achten Zeile der 16x16-Matrix die Anordnung [4,3,1,2,3,4,2,1, 4,3,1,2,3,4,2,1], der neunten Zeile der 16x16-Matrix die Anordnung [1,2,4,3,2,1,3,4, 1,2,4,3,2,1,3,4], der zehnten Zeile der 16x16-Matrix die Anordnung [4,3,2,1,3,4,1,2, 4,3,2,1,3,4,1,2], der elften Zeile der 16x16-Matrix die Anordnung [3,4,1,2,4,3,2,1, 3,4,1,2,4,3,2,1], der zwölften Zeile der 16x16-Matrix die Anordnung [2,1,3,4,1,2,4,3, 2,1,3,4,1,2,4,3], der dreizehnten Zeile der 16x16-Matrix die Anordnung [3,4,2,1,4,3,1,2, 3,4,2,1,4,3,1,2], der vierzehnten Zeile der 16x16-Matrix die Anordnung [1,2,3,4,2,1,4,3, 1,2,3,4,2,1,4,3], der fünfzehnten Zeile der 16x16-Matrix die Anordnung [2,1,4,3,1,2,3,4, 2,1,4,3,1,2,3,4], der sechzehnten Zeile der 16x16-Matrix die Anordnung [4,3,1,2,3,4,2,1, 4,3,1,2,3,4,2,1] aufweisen, oder b) die Grundelemente in der ersten Zeile der 16x16-Matrix die Anordnung [1,2,3,4,2,3,4,1, 1,4,3,2,4,3,2,1], der zweiten Zeile der 16x16-Matrix die Anordnung [4,3,2,1,1,4,3,2, 2,3,4,1,1,2,3,4], der dritten Zeile der 16x16-Matrix die Anordnung [3,4,1,2,4,1,2,3, 3,2,1,4,2,1,4,3], der vierten Zeile der 16x16-Matrix die Anordnung [2,1,4,3,3,2,1,4, 4,1,2,3,3,4,1,2], der fünften Zeile der 16x16-Matrix die Anordnung [4,1,2,3,3,4,1,2, 2,1,4,3,3,2,1,4], der sechsten Zeile der 16x16-Matrix die Anordnung [3,2,1,4,2,1,4,3, 3,4,1,2,4,1,2,3], der siebten Zeile der 16x16-Matrix die Anordnung [2,3,4,1,1,2,3,4, 4,3,2,1,1,4,3,2], der achten Zeile der 16x16-Matrix die Anordnung [1,4,3,2,4,3,2,1, 1,2,3,4,2,3,4,1], der neunten Zeile der 16x16-Matrix die Anordnung [1,4,3,2,4,3,2,1, 1,2,3,4,2,3,4,1], der zehnten Zeile der 16x16-Matrix die Anordnung [2,3,4,1,1,2,3,4, 4,3,2,1,1,4,3,2], der elften Zeile der 16x16-Matrix die Anordnung [3,2,1,4,2,1,4,3, 3,4,1,2,4,1,2,3], der zwölften Zeile der 16x16-Matrix die Anordnung [4,1,2,3,3,4,1,2, 2,1,4,3,3,2,1,4], der dreizehnten Zeile der 16x16-Matrix die Anordnung [2,1,4,3,3,2,1,4, 4,1,2,3,3,4,1,2], der vierzehnten Zeile der 16x16-Matrix die Anordnung [3,4,1,2,4,1,2,3, 3,2,1,4,2,1,4,3], der fünfzehnten Zeile der 16x16-Matrix die Anordnung [4,3,2,1,1,4,3,2, 2,3,4,1,1,2,3,4], der sechszehnten Zeile der 16x16-Matrix die Anordnung [1,2,3,4,2,3,4,1, 1,4,3,2,4,3,2,1], aufweisen,

oder c) die Grundelemente in der ersten Zeile der 16x16-Matrix die Anordnung [1,2,3,4,1,2,3,4, 1,2,3,4,1,2,3,4], der zweiten Zeile der 16x16-Matrix die Anordnung [4,3,2,1,4,3,2,1, 4,3,2,1,4,3,2,1], der dritten Zeile der 16x16-Matrix die Anordnung [3,4,1,2,3,4,1,2, 3,4,1,2,3,4,1,2], der vierten Zeile der 16x16-Matrix die Anordnung [2,1,4,3,2,1,4,3, 2,1,4,3,2,1,4,3], der fünften Zeile der 16x16-Matrix die Anordnung [1,2,3,4,1,2,3,4, 1,2,3,4,1,2,3,4], der sechsten Zeile der 16x16-Matrix die Anordnung [4,3,2,1,4,3,2,1, 4,3,2,1,4,3,2,1], der siebten Zeile der 16x16-Matrix die Anordnung [3,4,1,2,3,4,1,2, 3,4,1,2,3,4,1,2], der achten Zeile der 16x16-Matrix die Anordnung [2,1,4,3,2,1,4,3, 2,1,4,3,2,1,4,3], der neunten Zeile der 16x16-Matrix die Anordnung [1,2,3,4,1,2,3,4, 1,2,3,4,1,2,3,4], der zehnten Zeile der 16x16-Matrix die Anordnung [4,3,2,1,4,3,2,1, 4,3,2,1,4,3,2,1], der elften Zeile der 16x16-Matrix die Anordnung [3,4,1,2,3,4,1,2, 3,4,1,2,3,4,1,2], der zwölften Zeile der 16x16-Matrix die Anordnung [2,1,4,3,2,1,4,3, 2,1,4,3,2,1,4,3], der dreizehnten Zeile der 16x16-Matrix die Anordnung [1,2,3,4,1,2,3,4, 1,2,3,4,1,2,3,4], der vierzehnten Zeile der 16x16-Matrix die Anordnung [4,3,2,1,4,3,2,1, 4,3,2,1,4,3,2,1], der fünfzehnten Zeile der 16x16-Matrix die Anordnung [3,4,1,2,3,4,1,2, 3,4,1,2,3,4,1,2], der sechzehnten Zeile der 16x16-Matrix die Anordnung [2,1,4,3,2,1,4,3, 2,1,4,3,2,1,4,3] aufweisen, oder d) die Grundelemente in der ersten Zeile der 16x16-Matrix die Anordnung [1,2,3,4,2,1,4,3, 1,2,3,4,2,1,4,3], der zweiten Zeile der 16x16-Matrix die Anordnung [4,3,2,1,3,4,1,2, 4,3,2,1,3,4,1,2], der dritten Zeile der 16x16-Matrix die Anordnung [3,4,1,2,4,3,2,1, 3,4,1,2,4,3,2,1], der vierten Zeile der 16x16-Matrix die Anordnung [2,1,4,3,1,2,3,4, 2,1,4,3,1,2,3,4], der fünften Zeile der 16x16-Matrix die Anordnung [4,3,2,1,3,4,1,2, 4,3,2,1,3,4,1,2], der sechsten Zeile der 16x16-Matrix die Anordnung [1,2,3,4,2,1,4,3, 1,2,3,4,2,1,4,3], der siebten Zeile der 16x16-Matrix die Anordnung [2,1,4,3,1,2,3,4, 2,1,4,3,1,2,3,4], der achten Zeile der 16x16-Matrix die Anordnung [3,4,1,2,4,3,2,1, 3,4,1,2,4,3,2,1], der neunten Zeile der 16x16-Matrix die Anordnung [1,2,3,4,2,1,4,3, 1,2,3,4,2,1,4,3], der zehnten Zeile der 16x16-Matrix die Anordnung [4,3,2,1,3,4,1,2, 4,3,2,1,3,4,1,2], der elften Zeile der 16x16-Matrix die Anordnung [3,4,1,2,4,3,2,1, 3,4,1,2,4,3,2,1], der zwölften Zeile der 16x16-Matrix die Anordnung [2,1,4,3,1,2,3,4, 2,1,4,3,1,2,3,4], der dreizehnten Zeile der 16x16-Matrix die Anordnung [4,3,2,1,3,4,1,2, 4,3,2,1,3,4,1,2], der vierzehnten Zeile der 16x16-Matrix die Anordnung [1,2,3,4,2,1,4,3, 1,2,3,4,2,1,4,3], der fünfzehnten Zeile der 16x16-Matrix die Anordnung [2,1,4,3,1,2,3,4, 2,1,4,3,1,2,3,4], der sechzehnten Zeile der 16x16-Matrix die Anordnung [3,4,1,2,4,3,2,1, 3,4,1,2,4,3,2,1] aufweisen.

3. Integrierte Schaltung zur Messung der Polarisation von Licht

- mit polarisationsempfindlichen Sensoren mit unterschiedlichen Ausrichtungen der Polarisationsebenen als Grundelemente in vier unterschiedlichen Ausrichtungen (1,2,3,4),
- mit sensorischen Elementen, die je mit einem Polarisationsfilter zu einem der polarisationsempfindlichen Sensoren als bauliche Einheit zusammenwirkend angeordnet sind,
- wobei das polarisationsempfindliche Filter des als bauliche Einheit angeordneten polarisationsempfindlichen Sensors eine gezielte Ausdehnung und Orientierung aufweist,
- wobei das Polarisationsfilter mit lithographischen Methoden erzeugte Gitterstrukturen in mindestens einer Fertigungsebene aufweist,
- wobei die polarisationsempfindlichen Sensoren unterschiedlicher Ausrichtung aus einer Vielzahl von einzelnen Sensorelementen bestehen, die in einer Matrix angeordnet sind,
- wobei in der integrierten Schaltung Einrichtungen vorhanden sind, die konfiguriert sind, aus den Signalen der polarisationsempfindlichen Sensoren eine Aussage über die Polarisation des einfallenden Lichts zu treffen,
- wobei die Grundelemente mit unterschiedlichen Ausrichtungen (1,2,3,4) in einer 32x32-Matrix angeordnet sind,
- wobei

a) die Grundelemente in der ersten Zeile die Anordnung [12341234 23412341 12341234 23412341], der zweiten Zeile der 32x32-Matrix die Anordnung [43214321 14321432 43214321 14321432], der dritten Zeile der 32x32-Matrix die Anordnung [34123412 41234123 34123412 41234123], der vierten Zeile der 32x32-Matrix die Anordnung [21432143 32143214 21432143 32143214], der fünften Zeile der 32x32-Matrix die Anordnung [12341234 23412341 12341234 23412341], der sechsten Zeile der 32x32-Matrix die Anordnung [43214321 14321432 43214321 14321432], der siebten Zeile der 32x32-Matrix die Anordnung [34123412 41234123 34123412 41234123], der achten Zeile der 32x32-Matrix die Anordnung [21432143 32143214 21432143 32143214], der neunten Zeile der 32x32-Matrix die Anordnung [41234123 34123412 41234123 34123412], der zehnten Zeile der 32x32-Matrix die Anordnung [32143214 21432143 32143214 21432143], der elften Zeile der 32x32-Matrix die Anordnung [23412341 12341234 23412341 12341234], der zwölften Zeile der 32x32-Matrix die Anordnung [14321432 43214321 14321432 43214321], der 13. Zeile der 32x32-Matrix die Anordnung [41234123 34123412 41234123 34123412], der 14. Zeile der 32x32-Matrix die Anordnung [32143214 21432143 32143214 21432143], der 15. Zeile der 32x32-Matrix die Anordnung [23412341 12341234 23412341 12341234], der 16. Zeile der 32x32-Matrix die Anordnung [14321432 43214321 14321432 43214321], der 17. Zeile der 32x32-Matrix die Anordnung [12341234 23412341 12341234 23412341], der 18. Zeile der 32x32-Matrix die Anordnung [43214321 14321432 43214321 14321432], der 19. Zeile der 32x32-Matrix die Anordnung [34123412 41234123 34123412 41234123], der 20. Zeile der 32x32-Matrix die Anordnung [21432143 32143214 21432143 32143214], der 21. Zeile der 32x32-Matrix die Anordnung [12341234 23412341 12341234 23412341], der 22. Zeile der 32x32-Matrix die Anordnung [43214321 14321432 43214321 14321432], der 23. Zeile der 32x32-Matrix die Anordnung [34123412 41234123 34123412 41234123], der 24. Zeile der 32x32-Matrix die Anordnung [21432143 32143214 21432143 32143214], der 25. Zeile der 32x32-Matrix die Anordnung [41234123 34123412 41234123 34123412], der 26. Zeile der 32x32-Matrix die Anordnung [32143214 21432143 32143214 21432143], der 27. Zeile der 32x32-Matrix die Anordnung [23412341 12341234 23412341 12341234], der 28. Zeile der 32x32-Matrix die Anordnung [14321432 43214321 14321432 43214321], der 29. Zeile der 32x32-Matrix die Anordnung [41234123 34123412 41234123 34123412], der 30. Zeile der 32x32-Matrix die Anordnung [32143214 21432143 32143214 21432143], der 31. Zeile der 32x32-Matrix die Anordnung [23412341 12341234 23412341 12341234], der 32. Zeile der 32x32-Matrix die Anordnung [14321432 43214321 14321432 43214321] aufweisen,

oder b) die Grundelemente in der ersten Zeile der 32x32-Matrix die Anordnung [12342341 14324321 12342341 14324321], der zweiten Zeile der 32x32-Matrix die Anordnung [43211432 23411234 43211432 23411234], der dritten Zeile der 32x32-Matrix die Anordnung [34124123 32142143 34124123 32142143], der vierten Zeile der 32x32-Matrix die Anordnung [21433214 41233412 21433214 41233412], der fünften Zeile der 32x32-Matrix die Anordnung [41233412 21433214 41233412 21433214], der sechsten Zeile der 32x32-Matrix die Anordnung [32142143 34124123 32142143 34124123], der siebten Zeile der 32x32-Matrix die Anordnung [23411234 43211432 23411234 43211432], der achten Zeile der 32x32-Matrix die Anordnung [14324321 12342341 14324321 12342341], der neunten Zeile der 32x32-Matrix die Anordnung [14324321 12342341 14324321 12342341], der zehnten Zeile der 32x32-Matrix die Anordnung [23411234 43211432 23411234 43211432], der elften Zeile der 32x32-Matrix die Anordnung [32142143 34124123 32142143 34124123], der zwölften Zeile der 32x32-Matrix die Anordnung [41233412 21433214 41233412 21433214], der 13. Zeile der 32x32-Matrix die Anordnung [21433214 41233412 21433214 41233412], der 14. Zeile der 32x32-Matrix die Anordnung [34124123 32142143 34124123 32142143], der 15. Zeile der 32x32-Matrix die Anordnung [43211432 23411234 43211432 23411234], der 16. Zeile der 32x32-Matrix die Anordnung [12342341 14324321 12342341 14324321], der 17. Zeile der 32x32-Matrix die Anordnung [12342341 14324321 12342341 14324321], der 18. Zeile der 32x32-Matrix die Anordnung [43211432 23411234 43211432 23411234], der 19. Zeile der 32x32-Matrix die Anordnung [34124123 32142143 34124123 32142143], der 20. Zeile der 32x32-Matrix die Anordnung [21433214 41233412 21433214 41233412], der 21. Zeile der 32x32-Matrix die Anordnung [41233412 21433214 41233412 21433214], der 22. Zeile der 32x32-Matrix die Anordnung [32142143 34124123 32142143 34124123], der 23. Zeile der 32x32-Matrix die Anordnung [23411234 43211432 23411234 43211432], der 24. Zeile der 32x32-Matrix die Anordnung [14324321 12342341 14324321 12342341], der 25. Zeile der 32x32-Matrix die Anordnung [14324321 12342341 14324321 12342341], der 26. Zeile der 32x32-Matrix die Anordnung [23411234 43211432 23411234 43211432], der 27. Zeile der 32x32-Matrix die Anordnung [32142143 34124123 32142143 34124123], der 28. Zeile der 32x32-Matrix die Anordnung [41233412 21433214 41233412 21433214], der 29. Zeile der 32x32-Matrix die Anordnung [21433214 41233412 21433214 41233412], der 30. Zeile der 32x32-Matrix die Anordnung [34124123 32142143 34124123 32142143], der 31. Zeile der 32x32-Matrix die Anordnung [43211432 23411234 43211432 23411234], der 32. Zeile der 32x32-Matrix die Anordnung [12342341 14324321 12342341 14324321] aufweisen,

oder c) die Grundelemente in der ersten Zeile der 32x32-Matrix die Anordnung [12341234 21432143 12341234 21432143], der zweiten Zeile der 32x32-Matrix die Anordnung [43214321 34123412 43214321 34123412], der dritten Zeile der 32x32-Matrix die Anordnung [34123412 43214321 34123412 43214321], der vierten Zeile der 32x32-Matrix die Anordnung [21432143 12341234 21432143 12341234], der fünften Zeile der 32x32-Matrix die Anordnung [12341234 21432143 12341234 21432143], der sechsten Zeile der 32x32-Matrix die Anordnung [43214321 34123412 43214321 34123412], der siebten Zeile der 32x32-Matrix die Anordnung [34123412 43214321 34123412 43214321], der achten Zeile der 32x32-Matrix die Anordnung [21432143 12341234 21432143 12341234], der neunten Zeile der 32x32-Matrix die Anordnung [43214321 34123412 43214321 34123412], der zehnten Zeile der 32x32-Matrix die Anordnung [12341234 21432143 12341234 21432143], der elften Zeile der 32x32-Matrix die Anordnung [21432143 12341234 21432143 12341234], der zwölften Zeile der 32x32-Matrix die Anordnung [34123412 43214321 34123412 43214321], der 13. Zeile der 32x32-Matrix die Anordnung [43214321 34123412 43214321 34123412], der 14. Zeile der 32x32-Matrix die Anordnung [12341234 21432143 12341234 21432143], der 15. Zeile der 32x32-Matrix die Anordnung [21432143 12341234 21432143 12341234], der 16. Zeile der 32x32-Matrix die Anordnung [34123412 43214321 34123412 43214321], der 17. Zeile der 32x32-Matrix die Anordnung [12341234 21432143 12341234 21432143], der 18. Zeile der 32x32-Matrix die Anordnung [43214321 34123412 43214321 34123412], der 19. Zeile der 32x32-Matrix die Anordnung [34123412 43214321 34123412 43214321], der 20. Zeile der 32x32-Matrix die Anordnung [21432143 12341234 21432143 12341234], der 21. Zeile der 32x32-Matrix die Anordnung [12341234 21432143 12341234 21432143], der 22. Zeile der 32x32-Matrix die Anordnung [43214321 34123412 43214321 34123412], der 23. Zeile der 32x32-Matrix die Anordnung [34123412 43214321 34123412 43214321], der 24. Zeile der 32x32-Matrix die Anordnung [21432143 12341234 21432143 12341234], der 25. Zeile der 32x32-Matrix die Anordnung [43214321 34123412 43214321 34123412], der 26. Zeile der 32x32-Matrix die Anordnung [12341234 21432143 12341234 21432143], der 27. Zeile der 32x32-Matrix die Anordnung [21432143 12341234 21432143 12341234], der 28. Zeile der 32x32-Matrix die Anordnung [34123412 43214321 34123412 43214321], der 29. Zeile der 32x32-Matrix die Anordnung [43214321 34123412 43214321 34123412], der 30. Zeile der 32x32-Matrix die Anordnung [12341234 21432143 12341234 21432143], der 31. Zeile der 32x32-Matrix die Anordnung [21432143 12341234 21432143 12341234], der 32. Zeile der 32x32-Matrix die Anordnung [34123412 43214321 34123412 43214321] aufweisen,

oder d) die Grundelemente in der ersten Zeile der 32x32-Matrix die Anordnung [12342341 12342341 12342341 12342341], der zweiten Zeile der 32x32-Matrix die Anordnung [43211432 43211432 43211432 43211432], der dritten Zeile der 32x32-Matrix die Anordnung [34124123 34124123 34124123 34124123], der vierten Zeile der 32x32-Matrix die Anordnung [21433214 21433214 21433214 21433214], der fünften Zeile der 32x32-Matrix die Anordnung [41233412 41233412 41233412 41233412], der sechsten Zeile der 32x32-Matrix die Anordnung [32142143 32142143 32142143 32142143], der siebten Zeile der 32x32-Matrix die Anordnung [23411234 23411234 23411234 23411234], der achten Zeile der 32x32-Matrix die Anordnung [14324321 14324321 14324321 14324321], der neunten Zeile der 32x32-Matrix die Anordnung [12342341 12342341 12342341 12342341], der zehnten Zeile der 32x32-Matrix die Anordnung [43211432 43211432 43211432 43211432], der elften Zeile der 32x32-Matrix die Anordnung [34124123 34124123 34124123 34124123], der zwölften Zeile der 32x32-Matrix die Anordnung [21433214 21433214 21433214 21433214], der 13. Zeile der 32x32-Matrix die Anordnung [41233412 41233412 41233412 41233412], der 14. Zeile der 32x32-Matrix die Anordnung [32142143 32142143 32142143 32142143], der 15. Zeile der 32x32-Matrix die Anordnung [23411234 23411234 23411234 23411234], der 16. Zeile der 32x32-Matrix die Anordnung [14324321 14324321 14324321 14324321], der 17. Zeile der 32x32-Matrix die Anordnung [12342341 12342341 12342341 12342341], der 18. Zeile der 32x32-Matrix die Anordnung [43211432 43211432 43211432 43211432], der 19. Zeile der 32x32-Matrix die Anordnung [34124123 34124123 34124123 34124123], der 20. Zeile der 32x32-Matrix die Anordnung [21433214 21433214 21433214 21433214], der 21. Zeile der 32x32-Matrix die Anordnung [41233412 41233412 41233412 41233412], der 22. Zeile der 32x32-Matrix die Anordnung [32142143 32142143 32142143 32142143], der 23. Zeile der 32x32-Matrix die Anordnung [23411234 23411234 23411234 23411234], der 24. Zeile der 32x32-Matrix die Anordnung [14324321 14324321 14324321 14324321], der 25. Zeile der 32x32-Matrix die Anordnung [12342341 12342341 12342341 12342341], der 26. Zeile der 32x32-Matrix die Anordnung [43211432 43211432 43211432 43211432], der 27. Zeile der 32x32-Matrix die Anordnung [34124123 34124123 34124123 34124123], der 28. Zeile der 32x32-Matrix die Anordnung [21433214 21433214 21433214 21433214], der 29. Zeile der 32x32-Matrix die Anordnung [41233412 41233412 41233412 41233412], der 30. Zeile der 32x32-Matrix die Anordnung [32142143 32142143 32142143 32142143], der 31. Zeile der 32x32-Matrix die Anordnung [23411234 23411234 23411234 23411234], der 32. Zeile der 32x32-Matrix die Anordnung [14324321 14324321 14324321 14324321] aufweisen,

oder e) die Grundelemente in der ersten Zeile der 32x32-Matrix die Anordnung [12342143 12342143 12342143 12342143], der zweiten Zeile der 32x32-Matrix die Anordnung [43213412 43213412 43213412], der dritten Zeile der 32x32-Matrix die Anordnung [34124321 34124321 34124321 34124321], der vierten Zeile der 32x32-Matrix die Anordnung [21431234 21431234 21431234 21431234], der fünften Zeile der 32x32-Matrix die Anordnung [43213412 43213412 43213412 43213412], der sechsten Zeile der 32x32-Matrix die Anordnung [12342143 12342143 12342143 12342143], der siebten Zeile der 32x32-Matrix die Anordnung [21431234 21431234 21431234 21431234], der achten Zeile der 32x32-Matrix die Anordnung [34124321 34124321 34124321 34124321], der neunten Zeile der 32x32-Matrix die Anordnung [12342143 12342143 12342143 12342143], der zehnten Zeile der 32x32-Matrix die Anordnung [43213412 43213412 43213412 43213412], der elften Zeile der 32x32-Matrix die Anordnung [34124321 34124321 34124321 34124321], der zwölften Zeile der 32x32-Matrix die Anordnung [21431234 21431234 21431234 21431234], der 13. Zeile der 32x32-Matrix die Anordnung [43213412 43213412 43213412 43213412], der 14. Zeile der 32x32-Matrix die Anordnung [12342143 12342143 12342143 12342143], der 15. Zeile der 32x32-Matrix die Anordnung [21431234 21431234 21431234 21431234], der 16. Zeile der 32x32-Matrix die Anordnung [34124321 34124321 34124321 34124321], der 17. Zeile der 32x32-Matrix die Anordnung [12342143 12342143 12342143 12342143], der 18. Zeile der 32x32-Matrix die Anordnung [43213412 43213412 43213412 43213412], der 19. Zeile der 32x32-Matrix die Anordnung [34124321 34124321 34124321 34124321], der 20. Zeile der 32x32-Matrix die Anordnung [21431234 21431234 21431234 21431234], der 21. Zeile der 32x32-Matrix die Anordnung [43213412 43213412 43213412 43213412], der 22. Zeile der 32x32-Matrix die Anordnung [12342143 12342143 12342143 12342143], der 23. Zeile der 32x32-Matrix die Anordnung [21431234 21431234 21431234 21431234], der 24. Zeile der 32x32-Matrix die Anordnung [34124321 34124321 34124321 34124321], der 25. Zeile der 32x32-Matrix die Anordnung [12342143 12342143 12342143 12342143], der 26. Zeile der 32x32-Matrix die Anordnung [43213412 43213412 43213412 43213412], der 27. Zeile der 32x32-Matrix die Anordnung [34124321 34124321 34124321 34124321], der 28. Zeile der 32x32-Matrix die Anordnung [21431234 21431234 21431234 21431234], der 29. Zeile der 32x32-Matrix die Anordnung [43213412 43213412 43213412 43213412], der 30. Zeile der 32x32-Matrix die Anordnung [12342143 12342143 12342143 12342143], der 31. Zeile der 32x32-Matrix die Anordnung [21431234 21431234 21431234 21431234], der 32. Zeile der 32x32-Matrix die Anordnung [34124321 34124321 34124321 34124321] aufweisen.

4. Integrierte Schaltung zur Messung der Polarisation von Licht nach einem der Ansprüche 1 bis 3,

- wobei das Polarisationsfilter mit lithographischen Methoden erzeugte Gitterstrukturen in mindestens einer Fertigungsebene und/oder Verdrahtungsebene aufweist,
- wobei zwischen den Bereichen mit Gitterstrukturen lichtundurchlässige Wände vorhanden sind, die bei schrägem Lichteinfall eine Beeinflussung benachbarter Sensoren unterbinden,
- wobei die lichtundurchlässigen Wände durch Vias bzw. Kontakte hergestellt sind.

## Claims

1. Integrated circuit for measuring the polarization of light

- having polarization-sensitive sensors with different polarization plane alignments as basic elements in four different alignments (1,2,3,4),
- having sensory elements, each arranged so as to interact with a polarization filter to form one of the polarization-sensitive sensors as a structural unit,
- wherein the polarization-sensitive filter of the polarization-sensitive sensor arranged as a structural unit has a specific extension and orientation,
- wherein the polarization filter has lattice structures produced by lithographic methods in at least one production plane,
- wherein the polarization-sensitive sensors of different alignment consist of a plurality of individual sensor elements arranged in a matrix,
- wherein the integrated circuit contains devices configured to make a statement about the polarization of the incident light from the signals of the polarization-sensitive sensors,
- wherein the basic elements with different alignments (1,2,3,4) are arranged in an 8x8 matrix,
- wherein the basic elements in the first line of the 8x8 matrix have the arrangement [1,2,3,4,2,1,4,3], in the second line of the 8x8 matrix have the arrangement [4,3,2,1,3,4,1,2], in the third line of the 8x8 matrix have the arrangement [3,4,1,2,4,3,2,1], in the fourth line of the 8x8 matrix have the arrangement [2,1,4,3,1,2,3,4], in the fifth line of the 8x8 matrix have the arrangement [4,3,2,1,3,4,1,2], in the sixth line of the 8x8 matrix have the arrangement [1,2,3,4,2,1,4,3], in the seventh line of the 8x8 matrix have the arrangement [2,1,4,3,1,2,3,4], and in the eighth line of the 8x8 matrix have the arrangement [3,4,1,2,4,3,2,1].

2. Integrated circuit for measuring the polarization of light

   - having polarization-sensitive sensors with different polarization plane alignments as basic elements in four different alignments (1,2,3,4),
   - having sensory elements, each arranged so as to interact with a polarization filter to form one of the polarization-sensitive sensors as a structural unit,
   - wherein the polarization-sensitive filter of the polarization-sensitive sensor arranged as a structural unit has a specific extension and orientation,
   - wherein the polarization filter has lattice structures produced by lithographic methods in at least one production plane,
   - wherein the polarization-sensitive sensors of different alignment consist of a plurality of individual sensor elements arranged in a matrix,
   - wherein the integrated circuit contains devices configured to make a statement about the polarization of the incident light from the signals of the polarization-sensitive sensors,
   - wherein the basic elements with different alignments (1,2,3,4) are arranged in a 16x16 matrix,
   - wherein

     a) the basic elements in the first line of the 16x16 matrix have the arrangement [1,2,4,3,2,1,3,4, 1,2,4,3,2,1,3,4], in the second line of the 16x16 matrix have the arrangement [4,3,2,1,3,4,1,2, 4,3,2,1,3,4,1,2], in the third line of the 16x16 matrix have the arrangement [3,4,1,2,4,3,2,1, 3,4,1,2,4,3,2,1], in the fourth line of the 16x16 matrix have the arrangement [2,1,3,4,1,2,4,3, 2,1,3,4,1,2,4,3], in the fifth line of the 16x16 matrix have the arrangement [3,4,2,1,4,3,1,2, 3,4,2,1,4,3,1,2], in the sixth line of the 16x16 matrix have the arrangement [1,2,3,4,2,1,4,3, 1,2,3,4,2,1,4,3], in the seventh line of the 16x16 matrix have the arrangement [2,1,4,3,1,2,3,4, 2,1,4,3,1,2,3,4], in the eighth line of the 16x16 matrix have the arrangement [4,3,1,2,3,4,2,1, 4,3,1,2,3,4,2,1], in the ninth line of the 16x16 matrix have the arrangement [1,2,4,3,2,1,3,4, 1,2,4,3,2,1,3,4], in the tenth line of the 16x16 matrix have the arrangement [4,3,2,1,3,4,1,2, 4,3,2,1,3,4,1,2], in the eleventh line of the 16x16 matrix have the arrangement [3,4,1,2,4,3,2,1, 3,4,1,2,4,3,2,1], in the twelfth line of the 16x16 matrix have the arrangement [2,1,3,4,1,2,4,3, 2,1,3,4,1,2,4,3], in the thirteenth line of the 16x16 matrix have the arrangement [3,4,2,1,4,3,1,2, 3,4,2,1,4,3,1,2], in the fourteenth line of the 16x16 matrix have the arrangement [1,2,3,4,2,1,4,3, 1,2,3,4,2,1,4,3], in the fifteenth line of the 16x16 matrix have the arrangement [2,1,4,3,1,2,3,4, 2,1,4,3,1,2,3,4], in the sixteenth line of the 16x16 matrix have the arrangement [4,3,1,2,3,4,2,1, 4,3,1,2,3,4,2,1],
     or b) the basic elements in the first line of the 16x16 matrix have the arrangement [1,2,3,4,2,3,4,1, 1,4,3,2,4,3,2,1], in the second line of the 16x16 matrix have the arrangement [4,3,2,1,1,4,3,2, 2,3,4,1,1,2,3,4], in the third line of the 16x16 matrix have the arrangement [3,4,1,2,4,1,2,3, 3,2,1,4,2,1,4,3], in the fourth line of the 16x16 matrix have the arrangement [2,1,4,3,3,2,1,4, 4,1,2,3,3,4,1,2], in the fifth line of the 16x16 matrix have the arrangement [4,1,2,3,3,4,1,2, 2,1,4,3,3,2,1,4], in the sixth line of the 16x16 matrix have the arrangement [3,2,1,4,2,1,4,3, 3,4,1,2,4,1,2,3], in the seventh line of the 16x16 matrix have the arrangement [2,3,4,1,1,2,3,4, 4,3,2,1,1,4,3,2], in the eighth line of the 16x16 matrix have the arrangement [1,4,3,2,4,3,2,1, 1,2,3,4,2,3,4,1], in the ninth line of the 16x16 matrix have the arrangement [1,4,3,2,4,3,2,1, 1,2,3,4,2,3,4,1], in the tenth line of the 16x16 matrix have the arrangement [2,3,4,1,1,2,3,4, 4,3,2,1,1,4,3,2], in the eleventh line of the 16x16 matrix have the arrangement [3,2,1,4,2,1,4,3, 3,4,1,2,4,1,2,3], in the twelfth line of the 16x16 matrix have the arrangement [4,1,2,3,3,4,1,2, 2,1,4,3,3,2,1,4], in the thirteenth line of the 16x16 matrix have the arrangement [2,1,4,3,3,2,1,4, 4,1,2,3,3,4,1,2], in the fourteenth line of the 16x16 matrix have the arrangement [3,4,1,2,4,1,2,3, 3,2,1,4,2,1,4,3], in the fifteenth line of the 16x16 matrix have the arrangement [4,3,2,1,1,4,3,2, 2,3,4,1,1,2,3,4], in the sixteenth line of the 16x16 matrix have the arrangement [1,2,3,4,2,3,4,1, 1,4,3,2,4,3,2,1],

or c) the basic elements in the first line of the 16x16 matrix have the arrangement [1,2,3,4,1,2,3,4, 1,2,3,4,1,2,3,4], in the second line of the 16x16 matrix have the arrangement [4,3,2,1,4,3,2,1, 4,3,2,1,4,3,2,1], in the third line of the 16x16 matrix have the arrangement [3,4,1,2,3,4,1,2, 3,4,1,2,3,4,1,2], in the fourth line of the 16x16 matrix have the arrangement [2,1,4,3,2,1,4,3, 2,1,4,3,2,1,4,3], in the fifth line of the 16x16 matrix have the arrangement [1,2,3,4,1,2,3,4, 1,2,3,4,1,2,3,4], in the sixth line of the 16x16 matrix have the arrangement [4,3,2,1,4,3,2,1, 4,3,2,1,4,3,2,1], in the seventh line of the 16x16 matrix have the arrangement [3,4,1,2,3,4,1,2, 3,4,1,2,3,4,1,2], in the eighth line of the 16x16 matrix have the arrangement [2,1,4,3,2,1,4,3, 2,1,4,3,2,1,4,3], in the ninth line of the 16x16 matrix have the arrangement [1,2,3,4,1,2,3,4, 1,2,3,4,1,2,3,4], in the tenth line of the 16x16 matrix have the arrangement [4,3,2,1,4,3,2,1, 4,3,2,1,4,3,2,1], in the eleventh line of the 16x16 matrix have the arrangement [3,4,1,2,3,4,1,2, 3,4,1,2,3,4,1,2], in the twelfth line of the 16x16 matrix have the arrangement [2,1,4,3,2,1,4,3, 2,1,4,3,2,1,4,3], in the thirteenth line of the 16x16 matrix have the arrangement [1,2,3,4,1,2,3,4, 1,2,3,4,1,2,3,4], in the fourteenth line of the 16x16 matrix have the arrangement [4,3,2,1,4,3,2,1, 4,3,2,1,4,3,2,1], in the fifteenth line of the 16x16 matrix have the arrangement [3,4,1,2,3,4,1,2, 3,4,1,2,3,4,1,2], in the sixteenth line of the 16x16 matrix have the arrangement [2,1,4,3,2,1,4,3, 2,1,4,3,2,1,4,3],

or d) the basic elements in the first line of the 16x16 matrix have the arrangement [1,2,3,4,2,1,4,3, 1,2,3,4,2,1,4,3], in the second line of the 16x16 matrix have the arrangement [4,3,2,1,3,4,1,2, 4,3,2,1,3,4,1,2], in the third line of the 16x16 matrix have the arrangement [3,4,1,2,4,3,2,1, 3,4,1,2,4,3,2,1], in the fourth line of the 16x16 matrix have the arrangement [2,1,4,3,1,2,3,4, 2,1,4,3,1,2,3,4], in the fifth line of the 16x16 matrix have the arrangement [4,3,2,1,3,4,1,2, 4,3,2,1,3,4,1,2], in the sixth line of the 16x16 matrix have the arrangement [1,2,3,4,2,1,4,3, 1,2,3,4,2,1,4,3], in the seventh line of the 16x16 matrix have the arrangement [2,1,4,3,1,2,3,4, 2,1,4,3,1,2,3,4], in the eighth line of the 16x16 matrix have the arrangement [3,4,1,2,4,3,2,1, 3,4,1,2,4,3,2,1], in the ninth line of the 16x16 matrix have the arrangement [1,2,3,4,2,1,4,3, 1,2,3,4,2,1,4,3], in the tenth line of the 16x16 matrix have the arrangement [4,3,2,1,3,4,1,2, 4,3,2,1,3,4,1,2], in the eleventh line of the 16x16 matrix have the arrangement [3,4,1,2,4,3,2,1, 3,4,1,2,4,3,2,1], in the twelfth line of the 16x16 matrix have the arrangement [2,1,4,3,1,2,3,4, 2,1,4,3,1,2,3,4], in the thirteenth line of the 16x16 matrix have the arrangement [4,3,2,1,3,4,1,2, 4,3,2,1,3,4,1,2], in the fourteenth line of the 16x16 matrix have the arrangement [1,2,3,4,2,1,4,3, 1,2,3,4,2,1,4,3], in the fifteenth line of the 16x16 matrix have the arrangement [2,1,4,3,1,2,3,4, 2,1,4,3,1,2,3,4], in the sixteenth line of the 16x16 matrix have the arrangement [3,4,1,2,4,3,2,1, 3,4,1,2,4,3,2,1].

3. Integrated circuit for measuring the polarization of light

    - having polarization-sensitive sensors with different polarization plane alignments as basic elements in four different alignments (1,2,3,4),
    - having sensory elements, each arranged so as to interact with a polarization filter to form one of the polarization-sensitive sensors as a structural unit,
    - wherein the polarization-sensitive filter of the polarization-sensitive sensor arranged as a structural unit has a specific extension and orientation,
    - wherein the polarization filter has lattice structures produced by lithographic methods in at least one production plane,
    - wherein the polarization-sensitive sensors of different alignment consist of a plurality of individual sensor elements arranged in a matrix,
    - wherein the integrated circuit contains devices configured to make a statement about the polarization of the incident light from the signals of the polarization-sensitive sensors,
- wherein the basic elements with different alignments (1,2,3,4) are arranged in a 32x32 matrix,
- wherein

a) the basic elements in the first line have the arrangement [12341234 23412341 12341234 23412341], in the second line of the 32x32 matrix have the arrangement [43214321 14321432 43214321 14321432], in the third line of the 32x32 matrix have the arrangement [34123412 41234123 34123412 41234123], in the fourth line of the 32x32 matrix have the arrangement [21432143 32143214 21432143 32143214], in the fifth line of the 32x32 matrix have the arrangement [12341234 23412341 12341234 23412341], in the sixth line of the 32x32 matrix have the arrangement [43214321 14321432 43214321 14321432], in the seventh line of the 32x32 matrix have the arrangement [34123412 41234123 34123412 41234123], in the eighth line of the 32x32 matrix have the arrangement [21432143 32143214 21432143 32143214], in the ninth line of the 32x32 matrix have the arrangement [41234123 34123412 41234123 34123412], in the tenth line of the 32x32 matrix have the arrangement [32143214 21432143 32143214 21432143], in the eleventh line of the 32x32 matrix have the arrangement [23412341 12341234 23412341 12341234], in the twelfth line of the 32x32 matrix have the arrangement [14321432 43214321 14321432 43214321], in the 13th line of the 32x32 matrix have the arrangement [41234123 34123412 41234123 34123412], in the 14th line of the 32x32 matrix have the arrangement [32143214 21432143 32143214 21432143], in the 15th line of the 32x32 matrix have the arrangement [23412341 12341234 23412341 12341234], in the 16th line of the 32x32 matrix have the arrangement [14321432 43214321 14321432 43214321], in the 17th line of the 32x32 matrix have the arrangement [12341234 23412341 12341234 23412341], in the 18th line of the 32x32 matrix have the arrangement [43214321 14321432 43214321 14321432], in the 19th line of the 32x32 matrix have the arrangement [34123412 41234123 34123412 41234123], in the 20th line of the 32x32 matrix have the arrangement [21432143 32143214 21432143 32143214], in the 21st line of the 32x32 matrix have the arrangement [12341234 23412341 12341234 23412341], in the 22nd line of the 32x32 matrix have the arrangement [43214321 14321432 43214321 14321432], in the 23rd line of the 32x32 matrix have the arrangement [34123412 41234123 34123412 41234123], in the 24th line of the 32x32 matrix have the arrangement [21432143 32143214 21432143 32143214], in the 25th line of the 32x32 matrix have the arrangement [41234123 34123412 41234123 34123412], in the 26th line of the 32x32 matrix have the arrangement [32143214 21432143 32143214 21432143], in the 27th line of the 32x32 matrix have the arrangement [23412341 12341234 23412341 12341234], in the 28th line of the 32x32 matrix have the arrangement [14321432 43214321 14321432 43214321], in the 29th line of the 32x32 matrix have the arrangement [41234123 34123412 41234123 34123412], in the 30th line of the 32x32 matrix have the arrangement [32143214 21432143 32143214 21432143], in the 31st line of the 32x32 matrix have the arrangement [23412341 12341234 23412341 12341234], in the 32nd line of the 32x32 matrix have the arrangement [14321432 43214321 14321432 43214321],

or b) the basic elements in the first line of the 32x32 matrix have the arrangement [12342341 14324321 12342341 14324321], in the second line of the 32x32 matrix have the arrangement [43211432 23411234 43211432 23411234], in the third line of the 32x32 matrix have the arrangement [34124123 32142143 34124123 32142143], in the fourth line of the 32x32 matrix have the arrangement [21433214 41233412 21433214 41233412], in the fifth line of the 32x32 matrix have the arrangement [41233412 21433214 41233412 21433214], in the sixth line of the 32x32 matrix have the arrangement [32142143 34124123 32142143 34124123], in the seventh line of the 32x32 matrix have the arrangement [23411234 43211432 23411234 43211432], in the eighth line of the 32x32 matrix have the arrangement [14324321 12342341 14324321 12342341], in the ninth line of the 32x32 matrix have the arrangement [14324321 12342341 14324321 12342341], in the tenth line of the 32x32 matrix have the arrangement [23411234 43211432 23411234 43211432], in the eleventh line of the 32x32 matrix have the arrangement [32142143 34124123 32142143 34124123], in the twelfth line of the 32x32 matrix have the arrangement [41233412 21433214 41233412 21433214], in the 13th line of the 32x32 matrix have the arrangement [21433214 41233412 21433214 41233412], in the 14th line of the 32x32 matrix have the arrangement [34124123 32142143 34124123 32142143], in the 15th line of the 32x32 matrix have the arrangement [43211432 23411234 43211432 23411234], in the 16th line of the 32x32 matrix have the arrangement [12342341 14324321 12342341 14324321], in the 17th line of the 32x32 matrix have the arrangement [12342341 14324321 12342341 14324321], in the 18th line of the 32x32 matrix have the arrangement [43211432 23411234 43211432 23411234], in the 19th line of the 32x32 matrix have the arrangement [34124123 32142143 34124123 32142143], in the 20th line of the 32x32 matrix have the arrangement [21433214 41233412 21433214 41233412], in the 21st line of the 32x32 matrix have the arrangement [41233412 21433214 41233412 21433214], in the 22nd line of the 32x32 matrix have the arrangement [32142143 34124123 32142143 34124123], in the 23rd line of the 32x32 matrix have the arrangement [23411234 43211432 23411234 43211432], in the 24th line of the 32x32 matrix have the arrangement [14324321 12342341 14324321 12342341], in the 25th line of the 32x32 matrix have the arrangement [14324321 12342341 14324321 12342341], in the 26th line of the 32x32 matrix have the arrangement [23411234 43211432 23411234 43211432], in the 27th line of the 32x32 matrix have the arrangement [32142143 34124123 32142143 34124123], in the 28th line of the 32x32 matrix have the arrangement [41233412 21433214 41233412 21433214], in the 29th line of the 32x32 matrix have the arrangement [21433214 41233412 21433214 41233412], in the 30th line of the 32x32 matrix have the arrangement [34124123 32142143 34124123 32142143], in the 31st line of the 32x32 matrix have the arrangement [43211432 23411234 43211432 23411234], in the 32nd line of the 32x32 matrix have the arrangement [12342341 14324321 12342341 14324321],

or c) the basic elements in the first line of the 32x32 matrix have the arrangement [12341234 21432143 12341234 21432143], in the second line of the 32x32 matrix have the arrangement [43214321 34123412 43214321 34123412], in the third line of the 32x32 matrix have the arrangement [34123412 43214321 34123412 43214321], in the fourth line of the 32x32 matrix have the arrangement [21432143 12341234 21432143 12341234], in the fifth line of the 32x32 matrix have the arrangement [12341234 21432143 12341234 21432143], in the sixth line of the 32x32 matrix have the arrangement [43214321 34123412 43214321 34123412], in the seventh line of the 32x32 matrix have the arrangement [34123412 43214321 34123412 43214321], in the eighth line of the 32x32 matrix have the arrangement [21432143 12341234 21432143 12341234], in the ninth line of the 32x32 matrix have the arrangement [43214321 34123412 43214321 34123412], in the tenth line of the 32x32 matrix have the arrangement [12341234 21432143 12341234 21432143], in the eleventh line of the 32x32 matrix have the arrangement [21432143 12341234 21432143 12341234], in the twelfth line of the 32x32 matrix have the arrangement [34123412 43214321 34123412 43214321], in the 13th line of the 32x32 matrix have the arrangement [43214321 34123412 43214321 34123412], in the 14th line of the 32x32 matrix have the arrangement [12341234 21432143 12341234 21432143], in the 15th line of the 32x32 matrix have the arrangement [21432143 12341234 21432143 12341234], in the 16th line of the 32x32 matrix have the arrangement [34123412 43214321 34123412 43214321], in the 17th line of the 32x32 matrix have the arrangement [12341234 21432143 12341234 21432143], in the 18th line of the 32x32 matrix have the arrangement [43214321 34123412 43214321 34123412], in the 19th line of the 32x32 matrix have the arrangement [34123412 43214321 34123412 43214321], in the 20th line of the 32x32 matrix have the arrangement [21432143 12341234 21432143 12341234], in the 21st line of the 32x32 matrix have the arrangement [12341234 21432143 12341234 21432143], in the 22nd line of the 32x32 matrix have the arrangement [43214321 34123412 43214321 34123412], in the 23rd line of the 32x32 matrix have the arrangement [34123412 43214321 34123412 43214321], in the 24th line of the 32x32 matrix have the arrangement [21432143 12341234 21432143 12341234], in the 25th line of the 32x32 matrix have the arrangement [43214321 34123412 43214321 34123412], in the 26th line of the 32x32 matrix have the arrangement [12341234 21432143 12341234 21432143], in the 27th line of the 32x32 matrix have the arrangement [21432143 12341234 21432143 12341234], in the 28th line of the 32x32 matrix have the arrangement [34123412 43214321 34123412 43214321], in the 29th line of the 32x32 matrix have the arrangement [43214321 34123412 43214321 34123412], in the 30th line of the 32x32 matrix have the arrangement [12341234 21432143 12341234 21432143], in the 31st line of the 32x32 matrix have the arrangement [21432143 12341234 21432143 12341234], in the 32nd line of the 32x32 matrix have the arrangement [34123412 43214321 34123412 43214321],

or d) the basic elements in the first line of the 32x32 matrix have the arrangement [12342341 12342341 12342341 12342341], in the second line of the 32x32 matrix have the arrangement [43211432 43211432 43211432 43211432], in the third line of the 32x32 matrix have the arrangement [34124123 34124123 34124123 34124123], in the fourth line of the 32x32 matrix have the arrangement [21433214 21433214 21433214 21433214], in the fifth line of the 32x32 matrix have the arrangement [41233412 41233412 41233412 41233412], in the sixth line of the 32x32 matrix have the arrangement [32142143 32142143 32142143 32142143], in the seventh line of the 32x32 matrix have the arrangement [23411234 23411234 23411234 23411234], in the eighth line of the 32x32 matrix have the arrangement [14324321 14324321 14324321 14324321], in the ninth line of the 32x32 matrix have the arrangement [12342341 12342341 12342341 12342341], in the tenth line of the 32x32 matrix have the arrangement [43211432 43211432 43211432 43211432], in the eleventh line of the 32x32 matrix have the arrangement [34124123 34124123 34124123 34124123], in the twelfth line of the 32x32 matrix have the arrangement [21433214 21433214 21433214 21433214], in the 13th line of the 32x32 matrix have the arrangement [41233412 41233412 41233412 41233412], in the 14th line of the 32x32 matrix have the arrangement [32142143 32142143 32142143 32142143], in the 15th line of the 32x32 matrix have the arrangement [23411234 23411234 23411234 23411234], in the 16th line of the 32x32 matrix have the arrangement [14324321 14324321 14324321 14324321], in the 17th line of the 32x32 matrix have the arrangement [12342341 12342341 12342341 12342341], in the 18th line of the 32x32 matrix have the arrangement [43211432 43211432 43211432 43211432], in the 19th line of the 32x32 matrix have the arrangement [34124123 34124123 34124123 34124123], in the 20th line of the 32x32 matrix have the arrangement [21433214 21433214 21433214 21433214], in the 21st line of the 32x32 matrix have the arrangement [41233412 41233412 41233412 41233412], in the 22nd line of the 32x32 matrix have the arrangement [32142143 32142143 32142143 32142143], in the 23rd line of the 32x32 matrix have the arrangement [23411234 23411234 23411234 23411234], in the 24th line of the 32x32 matrix have the arrangement [14324321 14324321 14324321 14324321], in the 25th line of the 32x32 matrix have the arrangement [12342341 12342341 12342341 12342341], in the 26th line of the 32x32 matrix have the arrangement [43211432 43211432 43211432 43211432], in the 27th line of the 32x32 matrix have the arrangement [34124123 34124123 34124123 34124123], in the 28th line of the 32x32 matrix have the arrangement [21433214 21433214 21433214 21433214], in the 29th line of the 32x32 matrix have the arrangement [41233412 41233412 41233412 41233412], in the 30th line of the 32x32 matrix have the arrangement [32142143 32142143 32142143 32142143], in the 31st line of the 32x32 matrix have the arrangement [23411234 23411234 23411234 23411234], in the 32nd line of the 32x32 matrix have the arrangement [14324321 14324321 14324321 14324321],

or e) the basic elements in the first line of the 32x32 matrix are in the arrangement [12342143 12342143 12342143 12342143], in the second line of the 32x32 matrix have the arrangement [43213412 43213412 43213412 43213412], in the third line of the 32x32 matrix have the arrangement [34124321 34124321 34124321 34124321], in the fourth line of the 32x32 matrix have the arrangement [21431234 21431234 21431234 21431234], in the fifth line of the 32x32 matrix have the arrangement [43213412 43213412 43213412 43213412], in the sixth line of the 32x32 matrix have the arrangement [12342143 12342143 12342143 12342143], in the seventh line of the 32x32 matrix have the arrangement [21431234 21431234 21431234 21431234], in the eighth line of the 32x32 matrix have the arrangement [34124321 34124321 34124321 34124321], in the ninth line of the 32x32 matrix have the arrangement [12342143 12342143 12342143 12342143], in the tenth line of the 32x32 matrix have the arrangement [43213412 43213412 43213412 43213412], in the eleventh line of the 32x32 matrix have the arrangement [34124321 34124321 34124321 34124321], in the twelfth line of the 32x32 matrix have the arrangement [21431234 21431234 21431234 21431234], in the 13th line of the 32x32 matrix have the arrangement [43213412 43213412 43213412 43213412], in the 14th line of the 32x32 matrix have the arrangement [12342143 12342143 12342143 12342143], in the 15th line of the 32x32 matrix have the arrangement [21431234 21431234 21431234 21431234], in the 16th line of the 32x32 matrix have the arrangement [34124321 34124321 34124321 34124321], in the 17th line of the 32x32 matrix have the arrangement [12342143 12342143 12342143 12342143], in the 18th line of the 32x32 matrix have the arrangement [43213412 43213412 43213412 43213412], in the 19th line of the 32x32 matrix have the arrangement [34124321 34124321 34124321 34124321], in the 20th line of the 32x32 matrix have the arrangement [21431234 21431234 21431234 21431234], in the 21st line of the 32x32 matrix have the arrangement [43213412 43213412 43213412 43213412], in the 22nd line of the 32x32 matrix have the arrangement [12342143 12342143 12342143 12342143], in the 23rd line of the 32x32 matrix have the arrangement [21431234 21431234 21431234 21431234], in the 24th line of the 32x32 matrix have the arrangement [34124321 34124321 34124321 34124321], in the 25th line of the 32x32 matrix have the arrangement [12342143 12342143 12342143 12342143], in the 26th line of the 32x32 matrix have the arrangement [43213412 43213412 43213412 43213412], in the 27th line of the 32x32 matrix have the arrangement [34124321 34124321 34124321 34124321], in the 28th line of the 32x32 matrix have the arrangement [21431234 21431234 21431234 21431234], in the 29th line of the 32x32 matrix have the arrangement [43213412 43213412 43213412 43213412], in the 30th line of the 32x32 matrix have the arrangement [12342143 12342143 12342143 12342143], in the 31st line of the 32x32 matrix have the arrangement [21431234 21431234 21431234 21431234], in the 32nd line of the 32x32 matrix have the arrangement [34124321 34124321 34124321 34124321].

4. Integrated circuit for measuring the polarization of light according to any one of Claims 1 to 3,

   - wherein the polarization filter has lattice structures produced by lithographic methods in at least one production plane and/or wiring plane,
   - wherein, between the regions with lattice structures, there are opaque walls which prevent interference with adjacent sensors in the event of oblique light incidence,
   - wherein the opaque walls are made by means of vias or contacts.


**Revendications**

1. Circuit intégré pour mesurer la polarisation de la lumière

   - comprenant des capteurs sensibles à la polarisation ayant des orientations différentes des plans de polarisation en tant qu'éléments de base dans quatre orientations différentes (1,2,3,4),
   - comprenant des éléments de détection qui sont chacun agencés de manière à coopérer en tant qu'unité structurelle avec un filtre de polarisation pour former l'un des capteurs sensibles à la polarisation,

- le filtre sensible à la polarisation du capteur sensible à la polarisation agencé en tant qu'unité structurelle présentant une extension et une orientation ciblées,

- le filtre de polarisation présentant des structures de grille générées par des méthodes lithographiques dans au moins un plan de fabrication,

- les capteurs sensibles à la polarisation de différentes orientations étant constitués d'une pluralité d'éléments capteurs individuels qui sont agencés en une matrice,

- des dispositifs étant présents dans le circuit intégré, lesquels sont configurés pour fournir une information sur la polarisation de la lumière incidente à partir des signaux des capteurs sensibles à la polarisation,

- les éléments de base ayant différentes orientations (1,2,3,4) étant agencés en une matrice 8x8,

- dans lequel les éléments de base de la première ligne de la matrice 8x8 présentent l'agencement [1,2,3,4,2,1,4,3], la deuxième ligne de la matrice 8x8, l'agencement [4,3,2,1,3,4,1,2], la troisième ligne de la matrice 8x8, l'agencement [3,4,1,2,4,3,2,1], la quatrième ligne de la matrice 8x8, l'agencement [2,1,4,3,1,2,3,4], la cinquième ligne de la matrice 8x8, l'agencement [4,3,2,1,3,4,1,2], la sixième ligne de la matrice 8x8, l'agencement [1,2,3,4,2,1,4,3], la septième ligne de la matrice 8x8, l'agencement [2,1,4,3,1,2,3,4] et la huitième ligne de la matrice 8x8, l'agencement [3,4,1,2,4,3,2,1].

2. Circuit intégré pour mesurer la polarisation de la lumière

- comprenant des capteurs sensibles à la polarisation ayant des orientations différentes des plans de polarisation en tant qu'éléments de base dans quatre orientations différentes (1,2,3,4),

- comprenant des éléments de détection qui sont chacun agencés de manière à coopérer en tant qu'unité structurelle avec un filtre de polarisation pour former l'un des capteurs sensibles à la polarisation,

- le filtre sensible à la polarisation du capteur sensible à la polarisation agencé en tant qu'unité structurelle présentant une extension et une orientation ciblées,

- le filtre de polarisation présentant des structures de grille générées par des méthodes lithographiques dans au moins un plan de fabrication,

- les capteurs sensibles à la polarisation de différentes orientations étant constitués d'une pluralité d'éléments capteurs individuels qui sont agencés en une matrice,

- des dispositifs étant présents dans le circuit intégré, lesquels sont configurés pour fournir une information sur la polarisation de la lumière incidente à partir des signaux des capteurs sensibles à la polarisation,

- les éléments de base ayant différentes orientations (1,2,3,4) étant agencés en une matrice 16x16,

- dans lequel

a) les éléments de base de la première ligne de la matrice 16x16 présentent l'agencement [1,2,4,3,2,1,3,4, 1,2,4,3,2,1,3,4], la deuxième ligne de la matrice 16x16, l'agencement [4,3,2,1,3,4,1,2, 4,3,2,1,3,4,1,2], la troisième ligne de la matrice 16x16, l'agencement [3,4,1,2,4,3,2,1, 3,4,1,2,4,3,2,1], la quatrième ligne de la matrice 16x16, l'agencement [2,1,3,4,1,2,4,3, 2,1,3,4,1,2,4,3], la cinquième ligne de la matrice 16x16, l'agencement [3,4,2,1,4,3,1,2, 3,4,2,1,4,3,1,2], la sixième ligne de la matrice 16x16, l'agencement [1,2,3,4,2,1,4,3, 1,2,3,4,2,1,4,3], la septième ligne de la matrice 16x16, l'agencement [2,1,4,3,1,2,3,4, 2,1,4,3,1,2,3,4], la huitième ligne de la matrice 16x16, l'agencement [4,3,1,2,3,4,2,1, 4,3,1,2,3,4,2,1], la neuvième ligne de la matrice 16x16, l'agencement [1,2,4,3,2,1,3,4, 1,2,4,3,2,1,3,4], la dixième ligne de la matrice 16x16, l'agencement [4,3,2,1,3,4,1,2, 4,3,2,1,3,4,1,2], la onzième ligne de la matrice 16x16, l'agencement [3,4,1,2,4,3,2,1, 3,4,1,2,4,3,2,1], la douzième ligne de la matrice 16x16, l'agencement [2,1,3,4,1,2,4,3, 2,1,3,4,1,2,4,3], la treizième ligne de la matrice 16x16, l'agencement [3,4,2,1,4,3,1,2, 3,4,2,1,4,3,1,2], la quatorzième ligne de la matrice 16x16, l'agencement [1,2,3,4,2,1,4,3, 1,2,3,4,2,1,4,3], la quinzième ligne de la matrice 16x16, l'agencement [2,1,4,3,1,2,3,4, 2,1,4,3,1,2,3,4], la seizième ligne de la matrice 16x16, l'agencement [4,3,1,2,3,4,2,1, 4,3,1,2,3,4,2,1],

ou b) les éléments de base de la première ligne de la matrice 16x16 présentent l'agencement [1,2,3,4,2,3,4,1, 1,4,3,2,4,3,2,1], la deuxième ligne de la matrice 16x16, l'agencement [4,3,2,1,1,4,3,2, 2,3,4,1,1,2,3,4], la troisième ligne de la matrice 16x16, l'agencement [3,4,1,2,4,1,2,3, 3,2,1,4,2,1,4,3], la quatrième ligne de la matrice 16x16, l'agencement [2,1,4,3,3,2,1,4, 4,1,2,3,3,4,1,2], la cinquième ligne de la matrice 16x16, l'agencement [4,1,2,3,3,4,1,2, 2,1,4,3,3,2,1,4], la sixième ligne de la matrice 16x16, l'agencement [3,2,1,4,2,1,4,3, 3,4,1,2,4,1,2,3], la septième ligne de la matrice 16x16, l'agencement [2,3,4,1,1,2,3,4, 4,3,2,1,1,4,3,2], la huitième ligne de la matrice 16x16, l'agencement [1,4,3,2,4,3,2,1, 1,2,3,4,2,3,4,1], la neuvième ligne de la matrice 16x16, l'agencement [1,4,3,2,4,3,2,1, 1,2,3,4,2,3,4,1], la dixième ligne de la matrice 16x16, l'agencement [2,3,4,1,1,2,3,4, 4,3,2,1,1,4,3,2], la onzième ligne de la matrice 16x16, l'agencement [3,2,1,4,2,1,4,3, 3,4,1,2,4,1,2,3], la douzième ligne de la matrice 16x16, l'agencement [4,1,2,3,3,4,1,2, 2,1,4,3,3,2,1,4], la treizième ligne de la matrice 16x16, l'agencement [2,1,4,3,3,2,1,4, 4,1,2,3,3,4,1,2], la quatorzième ligne de la matrice 16x16, l'agencement [3,4,1,2,4,1,2,3, 3,2,1,4,2,1,4,3], la quinzième ligne de la matrice 16x16, l'agencement [4,3,2,1,1,4,3,2, 2,3,4,1,1,2,3,4], la seizième ligne de la matrice 16x16, l'agencement [1,2,3,4,2,3,4,1, 1,4,3,2,4,3,2,1],

ou c) les éléments de base de la première ligne de la matrice 16x16 présentent l'agencement [1,2,3,4,1,2,3,4, 1,2,3,4,1,2,3,4], la deuxième ligne de la matrice 16x16, l'agencement [4,3,2,1,4,3,2,1, 4,3,2,1,4,3,2,1], la troisième ligne de la matrice 16x16, l'agencement [3,4,1,2,3,4,1,2, 3,4,1,2,3,4,1,2], la quatrième ligne de la matrice 16x16, l'agencement [2,1,4,3,2,1,4,3, 2,1,4,3,2,1,4,3], la cinquième ligne de la matrice 16x16, l'agencement [1,2,3,4,1,2,3,4, 1,2,3,4,1,2,3,4], la sixième ligne de la matrice 16x16, l'agencement [4,3,2,1,4,3,2,1, 4,3,2,1,4,3,2,1], la septième ligne de la matrice 16x16, l'agencement [3,4,1,2,3,4,1,2, 3,4,1,2,3,4,1,2], la huitième ligne de la matrice 16x16, l'agencement [2,1,4,3,2,1,4,3, 2,1,4,3,2,1,4,3], la neuvième ligne de la matrice 16x16, l'agencement [1,2,3,4,1,2,3,4, 1,2,3,4,1,2,3,4], la dixième ligne de la matrice 16x16, l'agencement [4,3,2,1,4,3,2,1, 4,3,2,1,4,3,2,1], la onzième ligne de la matrice 16x16, l'agencement [3,4,1,2,3,4,1,2, 3,4,1,2,3,4,1,2], la douzième ligne de la matrice 16x16, l'agencement [2,1,4,3,2,1,4,3, 2,1,4,3,2,1,4,3], la treizième ligne de la matrice 16x16, l'agencement [1,2,3,4,1,2,3,4, 1,2,3,4,1,2,3,4], la quatorzième ligne de la matrice 16x16, l'agencement [4,3,2,1,4,3,2,1, 4,3,2,1,4,3,2,1], la quinzième ligne de la matrice 16x16, l'agencement [3,4,1,2,3,4,1,2, 3,4,1,2,3,4,1,2], la seizième ligne de la matrice 16x16, l'agencement [2,1,4,3,2,1,4,3, 2,1,4,3,2,1,4,31,

ou d) les éléments de base de la première ligne de la matrice 16x16 présentent l'agencement [1,2,3,4,2,1,4,3, 1,2,3,4,2,1,4,3], la deuxième ligne de la matrice 16x16, l'agencement [4,3,2,1,3,4,1,2, 4,3,2,1,3,4,1,2], la troisième ligne de la matrice 16x16, l'agencement [3,4,1,2,4,3,2,1, 3,4,1,2,4,3,2,1], la quatrième ligne de la matrice 16x16, l'agencement [2,1,4,3,1,2,3,4, 2,1,4,3,1,2,3,4], la cinquième ligne de la matrice 16x16, l'agencement [4,3,2,1,3,4,1,2, 4,3,2,1,3,4,1,2], la sixième ligne de la matrice 16x16, l'agencement [1,2,3,4,2,1,4,3, 1,2,3,4,2,1,4,3], la septième ligne de la matrice 16x16, l'agencement [2,1,4,3,1,2,3,4, 2,1,4,3,1,2,3,4], la huitième ligne de la matrice 16x16, l'agencement [3,4,1,2,4,3,2,1, 3,4,1,2,4,3,2,1], la neuvième ligne de la matrice 16x16, l'agencement [1,2,3,4,2,1,4,3, 1,2,3,4,2,1,4,3], la dixième ligne de la matrice 16x16, l'agencement [4,3,2,1,3,4,1,2, 4,3,2,1,3,4,1,2], la onzième ligne de la matrice 16x16, l'agencement [3,4,1,2,4,3,2,1, 3,4,1,2,4,3,2,1], la douzième ligne de la matrice 16x16, l'agencement [2,1,4,3,1,2,3,4, 2,1,4,3,1,2,3,4], la treizième ligne de la matrice 16x16, l'agencement [4,3,2,1,3,4,1,2, 4,3,2,1,3,4,1,2], la quatorzième ligne de la matrice 16x16, l'agencement [1,2,3,4,2,1,4,3, 1,2,3,4,2,1,4,3], la quinzième ligne de la matrice 16x16, l'agencement [2,1,4,3,1,2,3,4, 2,1,4,3,1,2,3,4], la seizième ligne de la matrice 16x16, l'agencement [3,4,1,2,4,3,2,1, 3,4,1,2,4,3,2,1].

**3.** Circuit intégré pour mesurer la polarisation de la lumière

- comprenant des capteurs sensibles à la polarisation ayant des orientations différentes des plans de polarisation en tant qu'éléments de base dans quatre orientations différentes (1,2,3,4),
- comprenant des éléments de détection qui sont chacun agencés de manière à coopérer en tant qu'unité structurelle avec un filtre de polarisation pour former l'un des capteurs sensibles à la polarisation,
- le filtre sensible à la polarisation du capteur sensible à la polarisation agencé en tant qu'unité structurelle présentant une extension et une orientation ciblées,
- le filtre de polarisation présentant des structures de grille générées par des méthodes lithographiques dans au moins un plan de fabrication,
- les capteurs sensibles à la polarisation de différentes orientations étant constitués d'une pluralité d'éléments capteurs individuels qui sont agencés en une matrice,
- des dispositifs étant présents dans le circuit intégré, lesquels sont configurés pour fournir une information sur la polarisation de la lumière incidente à partir des signaux des capteurs sensibles à la polarisation,
- les éléments de base ayant différentes orientations (1,2,3,4) étant agencés en une matrice 32x32,
- dans lequel

a) les éléments de base de la première ligne de la matrice 32x32 présentent l'agencement [12341234 23412341 12341234 23412341], la deuxième ligne de la matrice 32x32, l'agencement [43214321 14321432 43214321 14321432], la troisième ligne de la matrice 32x32, l'agencement [34123412 41234123 34123412 41234123], la quatrième ligne de la matrice 32x32, l'agencement [21432143 32143214 21432143 32143214], la cinquième ligne de la matrice 32x32, l'agencement [12341234 23412341 12341234 23412341], la sixième ligne de la matrice 32x32, l'agencement [43214321 14321432 43214321 14321432], la septième ligne de la matrice [34123412 41234123 34123412 41234123], la huitième ligne de la matrice 32x32, l'agencement [21432143 32143214 21432143 32143214], la neuvième ligne de la matrice 32x32, l'agencement [41234123 34123412 41234123 34123412], la dixième ligne de la matrice 32x32, l'agencement [32143214 21432143 32143214 21432143], la onzième ligne de la matrice 32x32, l'agencement [23412341 12341234 23412341 12341234], la douzième ligne de la matrice 32x32, l'agencement [14321432 43214321 14321432 43214321], la 13e ligne de la matrice 32x32, l'agencement [41234123 34123412 41234123 34123412], la 14e ligne de la matrice 32x32, l'agencement [32143214 21432143 32143214 21432143], la 15e ligne de la matrice 32x32, l'agencement [23412341 12341234 23412341 12341234], la 16e ligne de la matrice 32x32, l'agencement [14321432 43214321 14321432 43214321], la 17e ligne de la matrice 32x32, l'agencement [12341234 23412341 12341234 23412341], la 18e ligne de la matrice 32x32, l'agencement [43214321 14321432 43214321 14321432], la 19e ligne de la matrice 32x32, l'agencement [34123412 41234123 34123412 41234123], la 20e ligne de la matrice 32x32, l'agencement [21432143 32143214 21432143 32143214], la 21e ligne de la matrice 32x32, l'agencement [12341234 23412341 12341234 23412341], la 22e ligne de la matrice 32x32, l'agencement [43214321 14321432 43214321 14321432], la 23e ligne de la matrice 32x32, l'agencement [34123412 41234123 34123412 41234123], la 24e ligne de la matrice 32x32, l'agencement [21432143 32143214 21432143 32143214], la 25e ligne de la matrice 32x32, l'agencement [41234123 34123412 41234123 34123412], la 26e ligne de la matrice 32x32, l'agencement [32143214 21432143 32143214 21432143], la 27e ligne de la matrice 32x32, l'agencement [23412341 12341234 23412341 12341234], la 28e ligne de la matrice 32x32, l'agencement [14321432 43214321 14321432 43214321], la 29e ligne de la matrice 32x32, l'agencement [41234123 34123412 41234123 34123412], la 30e ligne de la matrice 32x32, l'agencement [32143214 21432143 32143214 21432143], la 31e ligne de la matrice 32x32, l'agencement [23412341 12341234 23412341 12341234], la 32e ligne de la matrice 32x32, l'agencement [14321432 43214321 14321432 43214321],

ou b) les éléments de base dans la première ligne de la matrice 32x32 présentent l'agencement [12342341 14324321 12342341 14324321], la deuxième ligne de la matrice 32x32, l'agencement [43211432 23411234 43211432 23411234], la troisième ligne de la matrice 32x32, l'agencement [34124123 32142143 34124123 32142143], la quatrième ligne de la matrice 32x32, l'agencement [21433214 41233412 21433214 41233412], la cinquième ligne de la matrice 32x32, l'agencement [41233412 21433214 41233412 21433214], la sixième ligne de la matrice 32x32, l'agencement [32142143 34124123 32142143 34124123], la septième ligne de la matrice 32x32, l'agencement [23411234 43211432 23411234 43211432], la huitième ligne de la matrice 32x32, l'agencement [14324321 12342341 14324321 12342341], la neuvième ligne de la matrice 32x32, l'agencement [14324321 12342341 14324321 12342341], la dixième ligne de la matrice 32x32, l'agencement [23411234 43211432 23411234 43211432], la onzième ligne de la matrice 32x32, l'agencement [32142143 34124123 32142143 34124123], la douzième ligne de la matrice 32x32, l'agencement [41233412 21433214 41233412 21433214], la 13e ligne de la matrice 32x32, l'agencement [21433214 41233412 21433214 41233412], la 14e ligne de la matrice 32x32, l'agencement [34124123 32142143 34124123 32142143], la 15e ligne de la matrice 32x32, l'agencement [43211432 23411234 43211432 23411234], la 16e ligne de la matrice 32x32, l'agencement [12342341 14324321 12342341 14324321], la 17e ligne de la matrice 32x32, l'agencement [12342341 14324321 12342341 14324321], la 18e ligne de la matrice 32x32, l'agencement [43211432 23411234 43211432 23411234], la 19e ligne de la matrice 32x32, l'agencement [34124123 32142143 34124123 32142143], la 20e ligne de la matrice 32x32, l'agencement [21433214 41233412 21433214 41233412], la 21e ligne de la matrice 32x32, l'agencement [41233412 21433214 41233412 21433214], la 22e ligne de la matrice 32x32, l'agencement [32142143 34124123 32142143 34124123], la 23e ligne de la matrice 32x32, l'agencement [23411234 43211432 23411234 43211432], la 24e ligne de la matrice 32x32, l'agencement [14324321 12342341 14324321 12342341], la 25e ligne de la matrice 32x32, l'agencement [14324321 12342341 14324321 12342341], la 26e ligne de la matrice 32x32, l'agencement [23411234 43211432 23411234 43211432], la 27e ligne de la matrice 32x32, l'agencement [32142143 34124123 32142143 34124123], la 28e ligne de la matrice 32x32, l'agencement [41233412 21433214 41233412 21433214], la 29e ligne de la matrice 32x32, l'agencement [21433214 41233412 21433214 41233412], la 30e ligne de la matrice 32x32, l'agencement [34124123 32142143 34124123 32142143], la 31e ligne de la matrice 32x32, l'agencement [43211432 23411234 43211432 23411234], la 32e ligne de la matrice 32x32, l'agencement [12342341 14324321 12342341 14324321],

ou c) les éléments de base de la première ligne de la matrice 32x32 présentent l'agencement [12341234 21432143 12341234 21432143], la deuxième ligne de la matrice 32x32, l'agencement [43214321 34123412 43214321 34123412], la troisième ligne de la matrice 32x32, l'agencement [34123412 43214321 34123412 43214321], la quatrième ligne de la matrice 32x32, l'agencement [21432143 12341234 21432143 12341234], la cinquième ligne de la matrice 32x32, l'agencement [12341234 21432143 12341234 21432143], la sixième ligne de la matrice 32x32, l'agencement [43214321 34123412 43214321 34123412], la septième ligne de la matrice 32x32, l'agencement [34123412 43214321 34123412 43214321], la huitième ligne de la matrice 32x32, l'agencement [21432143 12341234 21432143 12341234], la neuvième ligne de la matrice 32x32, l'agencement [43214321 34123412 43214321 34123412], la dixième ligne de la matrice 32x32, l'agencement [12341234 21432143 12341234 21432143], la onzième ligne de la matrice 32x32, l'agencement [21432143 12341234 21432143 12341234], la douzième ligne de la matrice 32x32, l'agencement [34123412 43214321 34123412 43214321], la 13e ligne de la matrice 32x32, l'agencement [43214321 34123412 43214321 34123412], la 14e ligne de la matrice 32x32, l'agencement [12341234 21432143 12341234 21432143], la 15e ligne de la matrice 32x32, l'agencement [21432143 12341234 21432143 12341234], la 16e ligne de la matrice 32x32, l'agencement [34123412 43214321 34123412 43214321], la 17e ligne de la matrice 32x32, l'agencement [12341234 21432143 12341234 21432143], la 18e ligne de la matrice 32x32, l'agencement [43214321 34123412 43214321 34123412], la 19e ligne de la matrice 32x32, l'agencement [34123412 43214321 34123412 43214321], la 20e ligne de la matrice 32x32, l'agencement [21432143 12341234 21432143 12341234], la 21e ligne de la matrice 32x32, l'agencement [12341234 21432143 12341234 21432143], la 22e ligne de la matrice 32x32, l'agencement [43214321 34123412 43214321 34123412], la 23e ligne de la matrice 32x32, l'agencement [34123412 43214321 34123412 43214321], la 24e ligne de la matrice 32x32, l'agencement [21432143 12341234 21432143 12341234], la 25e ligne de la matrice 32x32, l'agencement [43214321 34123412 43214321 34123412], la 26e ligne de la matrice 32x32, l'agencement [12341234 21432143 12341234 21432143], la 27e ligne de la matrice 32x32, l'agencement [21432143 12341234 21432143 12341234], la 28e ligne de la matrice 32x32, l'agencement [34123412 43214321 34123412 43214321], la 29e ligne de la matrice 32x32, l'agencement [43214321 34123412 43214321 34123412], la 30e ligne de la matrice 32x32, l'agencement [12341234 21432143 12341234 21432143], la 31e ligne de la matrice 32x32, l'agencement [21432143 12341234 21432143 12341234], la 32e ligne de la matrice 32x32, l'agencement [34123412 43214321 34123412 43214321],

ou d) les éléments de base de la première ligne de la matrice 32x32 présentent l'agencement [12342341 12342341 12342341 12342341], la deuxième ligne de la matrice 32x32, l'agencement [43211432 43211432 43211432 43211432], la troisième ligne de la matrice 32x32, l'agencement [34124123 34124123 34124123 34124123], la quatrième ligne de la matrice 32x32, l'agencement [21433214 21433214 21433214 21433214], la cinquième ligne de la matrice 32x32, l'agencement [41233412 41233412 41233412 41233412], la sixième ligne de la matrice 32x32, l'agencement [32142143 32142143 32142143 32142143], la septième ligne de la matrice 32x32, l'agencement [23411234 23411234 23411234 23411234], la huitième ligne de la matrice 32x32, l'agencement [14324321 14324321 14324321 14324321], la neuvième ligne de la matrice 32x32, l'agencement [12342341 12342341 12342341 12342341], la dixième ligne de la matrice 32x32, l'agencement [43211432 43211432 43211432 43211432], la onzième ligne de la matrice 32x32, l'agencement [34124123 34124123 34124123 34124123], la douzième ligne de la matrice 32x32, l'agencement [21433214 21433214 21433214 21433214], la 13e ligne de la matrice 32x32, l'agencement [41233412 41233412 41233412 41233412], la 14e ligne de la matrice 32x32, l'agencement [32142143 32142143 32142143 32142143], la 15e ligne de la matrice 32x32, l'agencement [23411234 23411234 23411234 23411234], la 16e ligne de la matrice 32x32, l'agencement [14324321 14324321 14324321 14324321], la 17e ligne de la matrice 32x32, l'agencement [12342341 12342341 12342341 12342341], la 18e ligne de la matrice 32x32, l'agencement [43211432 43211432 43211432 43211432], la 19e ligne de la matrice 32x32, l'agencement [34124123 34124123 34124123 34124123], la 20e ligne de la matrice 32x32, l'agencement [21433214 21433214 21433214 21433214], la 21e ligne de la matrice 32x32, l'agencement [41233412 41233412 41233412 41233412], la 22e ligne de la matrice 32x32, l'agencement [32142143 32142143 32142143 32142143], la 23e ligne de la matrice 32x32, l'agencement [23411234 23411234 23411234 23411234], la 24e ligne de la matrice 32x32, l'agencement [14324321 14324321 14324321 14324321], la 25e ligne de la matrice 32x32, l'agencement [12342341 12342341 12342341 12342341], la 26e ligne de la matrice 32x32, l'agencement [43211432 43211432 43211432 43211432], la 27e ligne de la matrice 32x32, l'agencement [34124123 34124123 34124123 34124123], la 28e ligne de la matrice 32x32, l'agencement [21433214 21433214 21433214 21433214], la 29e ligne de la matrice 32x32, l'agencement [41233412 41233412 41233412 41233412], la 30e ligne de la matrice 32x32, l'agencement [32142143 32142143 32142143 32142143], la 31e ligne de la matrice 32x32, l'agencement [23411234 23411234 23411234 23411234], la 32e ligne de la matrice 32x32, l'agencement [14324321 14324321 14324321 14324321],

ou e) les éléments de base de la première ligne de la matrice 32x32 présentent l'agencement [12342143 12342143 12342143 12342143], la deuxième ligne de la matrice 32x32, l'agencement [43213412 43213412 43213412 43213412], la troisième ligne de la matrice 32x32, l'agencement [34124321 34124321 34124321 34124321], la quatrième ligne de la matrice 32x32, l'agencement [21431234 21431234 21431234 21431234], la cinquième ligne de la matrice 32x32, l'agencement [43213412 43213412 43213412 43213412], la sixième ligne de la matrice 32x32, l'agencement [12342143 12342143 12342143 12342143], la septième ligne de la matrice 32x32, l'agencement [21431234 21431234 21431234 21431234], la huitième ligne de la matrice 32x32, l'agencement [34124321 34124321 34124321 34124321], la neuvième ligne de la matrice 32x32, l'agencement [12342143 12342143 12342143 12342143], la dixième ligne de la matrice 32x32, l'agencement [43213412 43213412 43213412 43213412], la onzième ligne de la matrice 32x32, l'agencement [34124321 34124321 34124321 34124321], la douzième ligne de la matrice 32x32, l'agencement [21431234 21431234 21431234 21431234], la 13e ligne de la matrice 32x32, l'agencement [43213412 43213412 43213412 43213412], la 14e ligne de la matrice 32x32, l'agencement [12342143 12342143 12342143 12342143], la 15e ligne de la matrice 32x32, l'agencement [21431234 21431234 21431234 21431234], la 16e ligne de la matrice 32x32, l'agencement [34124321 34124321 34124321 34124321], la 17e ligne de la matrice 32x32, l'agencement [12342143 12342143 12342143 12342143], la 18e ligne de la matrice 32x32, l'agencement [43213412 43213412 43213412 43213412], la 19e ligne de la matrice 32x32, l'agencement [34124321 34124321 34124321 34124321], la 20e ligne de la matrice 32x32, l'agencement [21431234 21431234 21431234 21431234], la 21e ligne de la matrice 32x32, l'agencement [43213412 43213412 43213412 43213412], la 22e ligne de la matrice 32x32, l'agencement [12342143 12342143 12342143 12342143], la 23e ligne de la matrice 32x32, l'agencement [21431234 21431234 21431234 21431234], la 24e ligne de la matrice 32x32, l'agencement [34124321 34124321 34124321 34124321], la 25e ligne de la matrice 32x32, l'agencement [12342143 12342143 12342143 12342143], la 26e ligne de la matrice 32x32, l'agencement [43213412 43213412 43213412 43213412], la 27e ligne de la matrice 32x32, l'agencement [34124321 34124321 34124321 34124321], la 28e ligne de la matrice 32x32, l'agencement [21431234 21431234 21431234 21431234], la 29e ligne de la matrice 32x32, l'agencement [43213412 43213412 43213412 43213412], la 30e ligne de la matrice 32x32, l'agencement [12342143 12342143 12342143 12342143], la 31e ligne de la matrice 32x32, l'agencement [21431234 21431234 21431234 21431234], la 32e ligne de la matrice 32x32, l'agencement [34124321 34124321 34124321 34124321].

4. Circuit intégré pour mesurer la polarisation de la lumière selon l'une quelconque des revendications 1 à 3,

- le filtre de polarisation présentant des structures de grille générées par des méthodes lithographiques dans au moins un plan de fabrication et/ou un plan de câblage,
- des parois opaques à la lumière étant présentes entre les zones dotées des structures de grille, lesquelles empêchent une influence sur les capteurs adjacents en cas d'incidence oblique de la lumière,
- les parois opaques à la lumière étant produites à travers des trous d'interconnexion ou des contacts.

Fig. 1: Rechteckige 8x8-Matrix aus 4
Grundelementen (Fig. 2 der EP2522960) mit
Symmetrieverletzung in den Ecken und nicht
deckungsgleichen Schwerpunkten der
Einzelelemente, da durch reine Kopier- und Scher-
Operation eines 4x1-Arrays zusammengesetzt,
entsprechend einer reinen Kopieroperation einer
unsymmetrischen 4x4-Grundmatrix

Fig. 2: Erfindungsgemäßes Array mit 32x32 Elementen für einen Polarisationssensor mit 4 um je 45° verdrehten Grundelementen. Es ist erkennbar, dass dem Array eine kleinere Grundzelle zugrunde liegt, aus dem sich ein übergeordnetes Muster bildet. Die Erzeugungsreihenfolge der Erweiterungsoperatoren zur Erzeugung dieses Matrix ist OP4-OP1-OP4-OP4

| 1 | 2 | 3 | 4 | 2 | 1 | 4 | 3 |
| 4 | 3 | 2 | 1 | 3 | 4 | 1 | 2 |
| 3 | 4 | 1 | 2 | 4 | 3 | 2 | 1 |
| 2 | 1 | 4 | 3 | 1 | 2 | 3 | 4 |
| 4 | 3 | 2 | 1 | 3 | 4 | 1 | 2 |
| 1 | 2 | 3 | 4 | 2 | 1 | 4 | 3 |
| 2 | 1 | 4 | 3 | 1 | 2 | 3 | 4 |
| 3 | 4 | 1 | 2 | 4 | 3 | 2 | 1 |

*Fig. 3: Ausschnitt mit einer 8x8 Teilmatrix. Es ist deutlich die Spiegelsymmetrie gegenüber dem Zentrum zu erkennen, durch die sichergestellt ist, dass die Schwerpunkte der Einzelkomponenten auf denselben Punkt fallen*

| 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 |
|---|---|---|---|---|---|---|---|---|---|---|---|---|---|---|---|---|---|---|---|---|---|---|---|---|---|---|---|---|---|---|---|
| 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 |
| 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 |
| 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 |
| 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 |
| 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 |
| 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 |
| 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 |
| 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 |
| 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 |
| 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 |
| 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 |
| 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 |
| 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 |
| 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 |
| 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 |
| 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 |
| 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 |
| 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 |
| 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 |
| 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 |
| 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 |
| 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 |
| 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 |
| 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 |
| 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 |
| 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 |
| 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 |
| 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 |
| 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 |
| 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 | 2 | 1 | 4 | 3 | 1 | 2 | 3 | 4 |
| 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 | 3 | 4 | 1 | 2 | 4 | 3 | 2 | 1 |

*Fig. 4: Matrix aus Fig. 2 mit numerierten Grundelementen zur einfacheren Identifizierung*

Fig. 5: *Virtuelles Belichtungs-Experiment zur Bestimmung der Qualität einer Matrix für einen Polarisationssensor. Die Lichtquelle wird über der Matrix verschoben und gekippt und z.B. im Abstand soweit verändert, dass die gewünschte Fehlergrenze (z.B. 2:1 Helligkeitsunterschied) gerade erreicht wird. Anschließend werden die Lichtintensitäten der einzelnen Grundelemente ermittelt und die Intensitäten gleichartiger Elemente addiert. Aus den gewonnenen 4 Werten kann eine Fehlergröße ermittelt werden. Die Verschiebung erfolgt zweckmäßig unter Einhaltung des Nyquist-Kriteriums, d.h. möglichst in Schritten einer halben Grundzelle oder weniger, um lokale Maxima erfassen zu können.*

Fig. 6: Ergebnis eines virtuellen
Beleuchtungsexperiments über die 32x32-Matrix von
Fig. 2 bzw. 3. Es ist erkennbar, dass bei einer
Verschiebung der Lichtquelle periodische Fehler
auftreten, diese jedoch relativ gleichmäßig verteilt
sind. Andere Matrizen gleicher Größenordnung sind
typischerweise für eine Vielzahl von Positionen
ebenfalls gut, weisen jedoch vereinzelt größere Fehler
auf

| X | X | | | | | X | X |
|---|---|---|---|---|---|---|---|
| X | X | | | | | X | X |
| | | | | | | | |
| | | | | | | | |
| | | | | | | | |
| | | | | | | | |
| X | X | | | | | X | X |
| X | X | | | | | X | X |

Fig. 7: Beispiel der Befüllung einer größeren
Matrix mit gesperrten Zonen in den Ecken,
gedacht zur Befüllung mit 2x2-Matritzen.
Neben der (trivialen) nachträglichen
Löschung von Elementen einer quadratischen
Matrix kann eine Permutation von allen
Teilmatrizen auf den verbleibenden Flächen zu
einer abweichenden und besseren Lösung
führen.

a) 12.5487888882    b) 12.5922011498    c) 12.6634934402    d) 12.8591702292

*Fig. 8: Auswahl der besten 16x16-Matrizen für 4 Grundelemente und zugehörige Auflösung (2er-Logarithmus aus dem Kehrwert des Fehlers)*

a) 15.2186402865

b) 15.3346640828

c) 15.4301443917

d)15.520219736

*Fig. 9: Auswahl der besten 32x32-Matrizen für 4 Grundelemente und zugehörige Auflösung (2er-Logarithmus aus dem Kehrwert des Fehlers). Es ist erkennbar, dass Muster mit erkennbar ausgedehnten Strukturen schlechter abschneiden (in a und c sind z.B. ausgedehnte Diagonalen erkennbar, in e (entspricht Fig. 3) liegt ein komplexeres Muster mit kürzeren Abschnitten vor)*

e) 15.5323944499

*Fig. 9 (Fortsetzung): Auswahl der besten 32x32-Matrizen für 4 Grundelemente und zugehörige Auflösung (2er-Logarithmus aus dem Kehrwert des Fehlers). Es ist erkennbar, dass Muster mit erkennbar ausgedehnten Strukturen schlechter abschneiden (in a und c sind z.B. ausgedehnte Diagonalen erkennbar, in e (entspricht Fig. 3) liegt ein komplexeres Muster mit kürzeren Abschnitten vor)*

**EP 4 394 461 B1**

**IN DER BESCHREIBUNG AUFGEFÜHRTE DOKUMENTE**

**In der Beschreibung aufgeführte Patentdokumente**

- DE 102005031966 A1
- EP 1902334 A1
- EP 2522960 A1
- US 2022221311 A1
- US 2016282149 A1
- US 6275291 B1